(19) Europäisches Patentamt / European Patent Office / Office européen des brevets

(11) **EP 4 661 348 A1**

(12) **EUROPEAN PATENT APPLICATION**
published in accordance with Art. 153(4) EPC

(43) Date of publication:
**10.12.2025 Bulletin 2025/50**

(21) Application number: **24756133.5**

(22) Date of filing: **05.02.2024**

(51) International Patent Classification (IPC):
**H04L 25/03** $^{(2006.01)}$       **H04B 7/0456** $^{(2017.01)}$

(52) Cooperative Patent Classification (CPC):
**H04B 7/0456; H04L 25/03**

(86) International application number:
**PCT/CN2024/076165**

(87) International publication number:
**WO 2024/169759 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 CN 202310154233**

(71) Applicant: **Huawei Technologies Co., Ltd.**
**Shenzhen, Guangdong 518129 (CN)**

(72) Inventors:
- **XU, Jun**
  **Shenzhen, Guangdong 518129 (CN)**
- **YANG, Yubo**
  **Shenzhen, Guangdong 518129 (CN)**
- **JIN, Huangping**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **UPLINK CODEBOOK INDICATION METHOD AND COMMUNICATION APPARATUS**

(57) Embodiments of this application provide an uplink codebook indication method and a communication apparatus that can enable a terminal device with more transmit antenna ports to perform uplink transmission and that may be applied to a 5G system. The method includes: A terminal device receives first information from a network device, and determines, based on both first indication information in the first information and a first index value indicated by second indication information, an uplink precoding matrix used to precode 2N antenna ports. In this way, the terminal device can enable, based on the uplink precoding matrix, the 2N antenna ports for uplink transmission, where N is a positive integer.

FIG. 4

## Description

This application claims priority to Chinese Patent Application No. 202310154233.6, filed with the China National Intellectual Property Administration on February 17, 2023 and entitled "UPLINK CODEBOOK INDICATION METHOD AND COMMUNICATION APPARATUS", which is incorporated herein by reference in its entirety.

## TECHNICAL FIELD

Embodiments of this application relate to the communication field, and in particular, to an uplink codebook indication method and a communication apparatus.

## BACKGROUND

In the 5th generation (the 5th generation, 5G) new radio (new radio, NR), a massive (Massive) multiple-input multiple-output (multiple-input multiple-output, MIMO) antenna technology plays a crucial role in spectral efficiency of a system. When sending uplink data, a terminal device needs to perform uplink precoding on the data, to use a spatial degree of freedom brought by the MIMO antenna technology.

In the 3rd generation partnership project (the 3rd generation partnership project, 3GPP) NR protocol, multi-antenna precoding for uplink transmission supports the following two types of transmission schemes: a codebook based uplink transmission scheme (codebook based UL transmission scheme) and a non-codebook based uplink transmission scheme (non-codebook based UL transmission scheme). The codebook based uplink transmission scheme is as follows: A network device determines an uplink precoding matrix and a number of uplink transmission layers for the terminal device based on information about an uplink channel between the network device and the terminal device, and selects, based on the uplink precoding matrix and the number of uplink transmission layers, a most similar codeword from a codebook (codebook) defined in the protocol, for indication to the terminal device.

However, the current protocol release (release, Rel/R) 16 defines only a codebook for terminal devices with two transmit antenna ports (2Tx) and four transmit antenna ports (4Tx), to enable codebook based uplink transmission, in other words, a maximum number of uplink transmission layers supported by each terminal device is 4. With development of the MIMO technology, the terminal device may support uplink transmission using more transmit antenna ports, to increase an uplink data throughput. Therefore, how to enable a terminal device with more transmit antenna ports to perform uplink transmission becomes an urgent problem to be resolved.

## SUMMARY

Embodiments of this application provide an uplink codebook indication method and a communication apparatus, to enable a terminal device with more transmit antenna ports to perform uplink transmission.

To achieve the foregoing objective, this application uses the following technical solutions.

According to a first aspect, an uplink codebook indication method is provided. The method may be performed by a terminal device, may be performed by a component of the terminal device, for example, a processor, a chip, or a chip system of the terminal device, or may be implemented by a logical module or software that can implement all or some functions of the terminal device. The following uses an example in which the method is performed by the terminal device for description. The method includes: The terminal device receives first information from a network device, and determines an uplink precoding matrix based on the first information. The first information indicates an uplink precoding matrix with 2N rows and L columns, the first information includes first indication information and second indication information, and the first indication information indicates a first submatrix with N rows and K columns in the uplink precoding matrix. When a first index value indicated by the second indication information is within a first index value range, the second indication information indicates a second submatrix with N rows and M columns in the uplink precoding matrix, and L=K+M. When a first index value indicated by the second indication information is within a second index value range, the second indication information indicates that the first submatrix is a precoding matrix for first N antenna ports, and L=K. When a first index value indicated by the second indication information is within a third index value range, the second indication information indicates that the first submatrix is a precoding matrix for last N antenna ports, and L=K. There is no intersection set between any two of the first index value range, the second index value range, and the third index value range, 2N is a number of antenna ports of the terminal device, L is a number of uplink transmission layers, and L, N, M, and K are positive integers.

Based on the uplink codebook indication method, the terminal device may determine the first submatrix in the uplink precoding matrix based on the first indication information in the first information, and determine a structure of the uplink precoding matrix based on the first index value indicated by the second indication information, to determine the uplink precoding matrix. Therefore, the terminal device can enable, by using the uplink precoding matrix, a terminal device with more transmit antenna ports to perform uplink transmission, for example, enable a terminal device with more than four antenna ports to perform uplink transmission of more than four uplink transmission layers, so that an uplink transmission throughput can be increased.

In a possible design solution, the method provided in this embodiment of this application may further include: The terminal device receives third indication information from the network device, where the third indication information indicates that the uplink precoding matrix is a non-fully-coherent precoding matrix, namely, a matrix type other than a fully-coherent precoding matrix. Based on this design solution, the terminal device may determine, based on the received third indication information, that the uplink precoding matrix is a non-fully-coherent precoding matrix. When the terminal device determines that the uplink precoding matrix is a non-fully-coherent precoding matrix, a specific non-fully-coherent precoding matrix of the uplink precoding matrix may be further determined based on the first submatrix or indication content of the third indication information, that is, the type of the uplink precoding matrix may be a first partially-coherent precoding matrix, a second partially-coherent precoding matrix, or a non-coherent precoding matrix. A range for searching for the first submatrix and/or the second submatrix may be reduced, to reduce calculation complexity of the terminal device.

For example, when the third indication information is indicated by using one bit, if the third indication information is 1, the uplink precoding matrix is a non-fully-coherent precoding matrix. When the first submatrix is a fully-coherent precoding matrix, the uplink precoding matrix is the first partially-coherent precoding matrix. When the first submatrix is a partially-coherent precoding matrix, the uplink precoding matrix is the second partially-coherent precoding matrix. When the first submatrix is a non-coherent precoding matrix, the uplink precoding matrix is the non-coherent precoding matrix.

For example, when the third indication information is indicated by using two bits, if the third indication information is not 00, the uplink precoding matrix is a non-fully-coherent precoding matrix. When the third indication information is 01, the uplink precoding matrix is the first partially-coherent precoding matrix. When the third indication information is 10, the uplink precoding matrix is the second partially-coherent precoding matrix. When the third indication information is 11, the uplink precoding matrix is the non-coherent precoding matrix.

In a possible design solution, the third indication information may be carried in downlink control information DCI. Based on this design solution, the third indication information may be carried in the DCI in a form of one bit or two bits, and is used to identify the type of the uplink precoding matrix. In addition, the third indication information may alternatively be carried in a message or signaling such as an RRC message or MAC-CE signaling for sending. This is not specifically limited in embodiments of this application.

In a possible design solution, when the second indication information indicates the second submatrix with N rows and M columns in the uplink precoding matrix, the uplink precoding matrix may be represented as $\mathbf{W} = \begin{bmatrix} \mathbf{P}_1 & \mathbf{0} \\ \mathbf{0} & \mathbf{P}_2 \end{bmatrix}$, where $\mathbf{W}$ is the uplink precoding matrix, $\mathbf{P}_1$ is the first submatrix, and $\mathbf{P}_2$ is the second submatrix.

In a possible design solution, when the second indication information indicates that the first submatrix is the precoding matrix for first N antenna ports, the uplink precoding matrix may be represented as $\mathbf{W} = \begin{bmatrix} \mathbf{P}_1 \\ \mathbf{0} \end{bmatrix}$, where $\mathbf{W}$ is the uplink precoding matrix, and $\mathbf{P}_1$ is the first submatrix.

In a possible design solution, when the second indication information indicates that the first submatrix is the precoding matrix for last N antenna ports, the uplink precoding matrix may be represented as $\mathbf{W} = \begin{bmatrix} \mathbf{0} \\ \mathbf{P}_1 \end{bmatrix}$, where $\mathbf{W}$ is the uplink precoding matrix, and $\mathbf{P}_1$ is the first submatrix.

In a possible design solution, the second indication information may indicate $2^T$ first index values by using T bits, the first index value range is [0, Q], the second index value range is (Q, J], and the third index value range is (J, $2^T$), where T, Q, and J are positive integers.

In a possible design solution, a type of the first submatrix may be a fully-coherent precoding matrix, a partially-coherent precoding matrix, or a non-coherent precoding matrix; and a type of the second submatrix may be the fully-coherent precoding matrix, the partially-coherent precoding matrix, or the non-coherent precoding matrix.

In a possible design solution, a type of the uplink precoding matrix may be a first partially-coherent precoding matrix, a second partially-coherent precoding matrix, or a non-coherent precoding matrix, where the first partially-coherent precoding matrix represents that the 2N antenna ports are divided into two groups for coherent transmission, and the second partially-coherent precoding matrix represents that the 2N antenna ports are divided into four groups for coherent transmission.

In a possible design solution, the first information may be carried in DCI. In addition, the first information may alternatively be carried in a message or signaling such as an RRC message or MAC-CE signaling for sending. This is not specifically limited in embodiments of this application.

According to a second aspect, an uplink codebook indication method is provided. The method may be performed by a network device, or may be performed by a component of a network device, for example, a processor, a chip, or a chip system of the network device, or may be implemented by a logical module or software that can implement all or some functions of a network device. The following uses an example in which the method is performed by the network device for description. The method includes: The network device generates first information, and sends the first information to a terminal device. The first information indicates an uplink precoding matrix with 2N rows and L columns, the first information includes first indication information and second indication information, and the first indication information indicates a first submatrix with N rows and K columns in the uplink precoding matrix. When the second indication information indicates a second submatrix with N rows and M columns in the uplink precoding matrix, a first index value indicated by the second indication information is within a first index value range, and L=K+M. When the second indication information indicates that the first submatrix is a precoding matrix for first N antenna ports, a first index value indicated by the second indication information is within a second index value range, and L=K. When the second indication information indicates that the first submatrix is a precoding matrix for last N antenna ports, a first index value indicated by the second indication information is within a third index value range, and L=K. There is no intersection set between any two of the first index value range, the second index value range, and the third index value range, 2N is a number of antenna ports of the terminal device, L is a number of uplink transmission layers, and L, N, M, and K are positive integers.

Based on the uplink codebook indication method, the network device may construct, based on the first submatrix used to precode the N antenna ports, the uplink precoding matrix used to precode the 2N antenna ports, and indicate the uplink precoding matrix to the terminal device by using the first indication information and the second indication information, and therefore, the terminal device can enable, by using the uplink precoding matrix, a terminal device with more transmit antenna ports to perform uplink transmission. For example, a terminal device with more than four antenna ports is enabled to perform uplink transmission of more than four uplink transmission layers, so that an uplink transmission throughput can be increased.

In a possible design solution, the method provided in this embodiment of this application may further include: The network device sends third indication information to the terminal device. The third indication information indicates that the uplink precoding matrix is a non-fully-coherent precoding matrix. Based on this design solution, the network device may indicate, by using the third indication information, that the uplink precoding matrix may be of a matrix type other than the non-fully-coherent precoding matrix, so that calculation complexity of the terminal device can be reduced.

In a possible design solution, the third indication information may be carried in downlink control information DCI. Based on this design solution, the third indication information may be carried in the DCI in a form of one bit or two bits, and is used to identify the type of the uplink precoding matrix. In addition, the third indication information may alternatively be carried in a message or signaling such as an RRC message or MAC-CE signaling for sending. This is not specifically limited in embodiments of this application.

In a possible design solution, when the second indication information indicates the second submatrix with N rows and M columns in the uplink precoding matrix, the uplink precoding matrix may be represented as $\mathbf{W} = \begin{bmatrix} \mathbf{P_1} & \mathbf{0} \\ \mathbf{0} & \mathbf{P_2} \end{bmatrix}$, where $\mathbf{W}$ is the uplink precoding matrix, $\mathbf{P_1}$ is the first submatrix, and $\mathbf{P_2}$ is the second submatrix.

In a possible design solution, when the second indication information indicates that the first submatrix is the precoding matrix for first N antenna ports, the uplink precoding matrix may be represented as $\mathbf{W} = \begin{bmatrix} \mathbf{P_1} \\ \mathbf{0} \end{bmatrix}$, where $\mathbf{W}$ is the uplink precoding matrix, and $\mathbf{P_1}$ is the first submatrix.

In a possible design solution, when the second indication information indicates that the first submatrix is the precoding matrix for last N antenna ports, the uplink precoding matrix may be represented as $\mathbf{W} = \begin{bmatrix} \mathbf{0} \\ \mathbf{P_1} \end{bmatrix}$, where $\mathbf{W}$ is the uplink precoding matrix, and $\mathbf{P_1}$ is the first submatrix.

In a possible design solution, the second indication information may indicate $2^T$ first index values by using T bits, the first index value range is [0, Q], the second index value range is (Q, J], and the third index value range is (J, $2^T$), where T, Q, and J are positive integers.

In a possible design solution, a type of the first submatrix may be a fully-coherent precoding matrix, a partially-coherent precoding matrix, or a non-coherent precoding matrix; and a type of the second submatrix may be the fully-coherent precoding matrix, the partially-coherent precoding matrix, or the non-coherent precoding matrix.

In a possible design solution, a type of the uplink precoding matrix may be a first partially-coherent precoding matrix, a second partially-coherent precoding matrix, or a non-coherent precoding matrix, where the first partially-coherent precoding matrix represents that the 2N antenna ports are divided into two groups for coherent transmission, and the second partially-coherent precoding matrix represents that the 2N antenna ports are divided into four groups for coherent transmission.

In a possible design solution, the first information may be carried in DCI. In addition, the first information may alternatively be carried in a message or signaling such as an RRC message or MAC-CE signaling for sending. This is not specifically limited in embodiments of this application.

For technical effects of the method according to the second aspect, refer to the technical effects of the method according to the first aspect. Details are not described herein again.

According to a third aspect, a communication apparatus is provided, configured to implement the foregoing methods. The communication apparatus may be the terminal device in the first aspect, an apparatus including the terminal device, or an apparatus included in the terminal device, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The transceiver module is configured to receive first information from a network device. The processing module is configured to determine an uplink precoding matrix based on the first information. The first information indicates an uplink precoding matrix with 2N rows and L columns, the first information includes first indication information and second indication information, and the first indication information indicates a first submatrix with N rows and K columns in the uplink precoding matrix. When a first index value indicated by the second indication information is within a first index value range, the second indication information indicates a second submatrix with N rows and M columns in the uplink precoding matrix, and L=K+M. When a first index value indicated by the second indication information is within a second index value range, the second indication information indicates that the first submatrix is a precoding matrix for first N antenna ports, and L=K. When a first index value indicated by the second indication information is within a third index value range, the second indication information indicates that the first submatrix is a precoding matrix for last N antenna ports, and L=K. There is no intersection set between any two of the first index value range, the second index value range, and the third index value range, 2N is a number of antenna ports of a terminal device, L is a number of uplink transmission layers, and L, N, M, and K are positive integers.

In a possible design solution, the transceiver module is further configured to receive third indication information from the network device, where the third indication information indicates that the uplink precoding matrix is a non-fully-coherent precoding matrix.

In a possible design solution, the third indication information may be carried in downlink control information DCI.

In a possible design solution, when the second indication information indicates the second submatrix with N rows and M columns in the uplink precoding matrix, the uplink precoding matrix may be represented as $\mathbf{W} = \begin{bmatrix} \mathbf{P}_1 & \mathbf{0} \\ \mathbf{0} & \mathbf{P}_2 \end{bmatrix}$, where $\mathbf{W}$ is the uplink precoding matrix, $\mathbf{P}_1$ is the first submatrix, and $\mathbf{P}_2$ is the second submatrix.

In a possible design solution, when the second indication information indicates that the first submatrix is the precoding matrix for first N antenna ports, the uplink precoding matrix may be represented as $\mathbf{W} = \begin{bmatrix} \mathbf{P}_1 \\ \mathbf{0} \end{bmatrix}$, where $\mathbf{W}$ is the uplink precoding matrix, and $\mathbf{P}_1$ is the first submatrix.

In a possible design solution, when the second indication information indicates that the first submatrix is the precoding matrix for last N antenna ports, the uplink precoding matrix may be represented as $\mathbf{W} = \begin{bmatrix} \mathbf{0} \\ \mathbf{P}_1 \end{bmatrix}$, where $\mathbf{W}$ is the uplink precoding matrix, and $\mathbf{P}_1$ is the first submatrix.

In a possible design solution, the second indication information may indicate $2^T$ first index values by using T bits, the first index value range is [0, Q], the second index value range is (Q, J], and the third index value range is (J, $2^T$), where T, Q, and J are positive integers.

In a possible design solution, a type of the first submatrix may be a fully-coherent precoding matrix, a partially-coherent precoding matrix, or a non-coherent precoding matrix; and a type of the second submatrix may be the fully-coherent precoding matrix, the partially-coherent precoding matrix, or the non-coherent precoding matrix.

In a possible design solution, a type of the uplink precoding matrix may be a first partially-coherent precoding matrix, a second partially-coherent precoding matrix, or a non-coherent precoding matrix, where the first partially-coherent precoding matrix represents that the 2N antenna ports are divided into two groups for coherent transmission, and the second partially-coherent precoding matrix represents that the 2N antenna ports are divided into four groups for coherent transmission.

In a possible design solution, the first information may be carried in DCI.

In a possible design solution, the transceiver module may include a receiving module and a sending module. The sending module is configured to implement a sending function of the communication apparatus according to the third aspect, and the receiving module is configured to implement a receiving function of the communication apparatus according to the third aspect.

In a possible design solution, the communication apparatus according to the third aspect may further include a storage module, and the storage module stores a program or instructions. When the processing module executes the program or the instructions, the communication apparatus according to the third aspect may be enabled to perform the method according to the first aspect.

For technical effects of the communication apparatus according to the third aspect, refer to the technical effects of the method according to the first aspect. Details are not described herein again.

According to a fourth aspect, a communication apparatus is provided, configured to implement the foregoing methods. The communication apparatus may be the network device in the second aspect, an apparatus including the network device, or an apparatus included in the network device, for example, a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to generate first information. The transceiver module is configured to send the first information to the terminal device. The first information indicates an uplink precoding matrix with 2N rows and L columns, the first information includes first indication information and second indication information, and the first indication information indicates a first submatrix with N rows and K columns in the uplink precoding matrix. When the second indication information indicates a second submatrix with N rows and M columns in the uplink precoding matrix, a first index value indicated by the second indication information is within a first index value range, and L=K+M. When the second indication information indicates that the first submatrix is a precoding matrix for first N antenna ports, a first index value indicated by the second indication information is within a second index value range, and L=K. When the second indication information indicates that the first submatrix is a precoding matrix for last N antenna ports, a first index value indicated by the second indication information is within a third index value range, and L=K. There is no intersection set between any two of the first index value range, the second index value range, and the third index value range, 2N is a number of antenna ports of the terminal device, L is a number of uplink transmission layers, and L, N, M, and K are positive integers.

In a possible design solution, the transceiver module is further configured to send third indication information to the terminal device. The third indication information indicates that the uplink precoding matrix is a non-fully-coherent precoding matrix.

In a possible design solution, the third indication information may be carried in downlink control information DCI.

In a possible design solution, when the second indication information indicates the second submatrix with N rows and M columns in the uplink precoding matrix, the uplink precoding matrix may be represented as $\mathbf{W} = \begin{bmatrix} \mathbf{P_1} & \mathbf{0} \\ \mathbf{0} & \mathbf{P_2} \end{bmatrix}$, where $\mathbf{W}$ is the uplink precoding matrix, $\mathbf{P_1}$ is the first submatrix, and $\mathbf{P_2}$ is the second submatrix.

In a possible design solution, when the second indication information indicates that the first submatrix is the precoding matrix for first N antenna ports, the uplink precoding matrix may be represented as $\mathbf{W} = \begin{bmatrix} \mathbf{P_1} \\ \mathbf{0} \end{bmatrix}$, where $\mathbf{W}$ is the uplink precoding matrix, and $\mathbf{P_1}$ is the first submatrix.

In a possible design solution, when the second indication information indicates that the first submatrix is the precoding matrix for last N antenna ports, the uplink precoding matrix may be represented as $\mathbf{W} = \begin{bmatrix} \mathbf{0} \\ \mathbf{P_1} \end{bmatrix}$, where $\mathbf{W}$ is the uplink precoding matrix, and $\mathbf{P_1}$ is the first submatrix.

In a possible design solution, the second indication information may indicate $2^T$ first index values by using T bits, the first index value range is [0, Q], the second index value range is (Q, J], and the third index value range is (J, $2^T$), where T, Q, and J are positive integers.

In a possible design solution, a type of the first submatrix may be a fully-coherent precoding matrix, a partially-coherent precoding matrix, or a non-coherent precoding matrix; and a type of the second submatrix may be the fully-coherent precoding matrix, the partially-coherent precoding matrix, or the non-coherent precoding matrix.

In a possible design solution, a type of the uplink precoding matrix may be a first partially-coherent precoding matrix, a second partially-coherent precoding matrix, or a non-coherent precoding matrix, where the first partially-coherent precoding matrix represents that the 2N antenna ports are divided into two groups for coherent transmission, and the second partially-coherent precoding matrix represents that the 2N antenna ports are divided into four groups for coherent transmission.

In a possible design solution, the first information may be carried in DCI.

In a possible design solution, the transceiver module may include a receiving module and a sending module. The sending module is configured to implement a sending function of the communication apparatus according to the fourth aspect, and the receiving module is configured to implement a receiving function of the communication apparatus according to the fourth aspect.

In a possible design solution, the communication apparatus according to the fourth aspect may further include a storage module, and the storage module stores a program or instructions. When the processing module executes the program or the instructions, the communication apparatus according to the fourth aspect may be enabled to perform the method according to the second aspect.

For technical effects of the communication apparatus according to the fourth aspect, refer to the technical effects of the method according to the second aspect. Details are not described herein again.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to the first aspect or the second aspect.

According to a sixth aspect, a communication apparatus is provided, including at least one processor. The processor is configured to execute a computer program or instructions stored in a memory, so that the communication apparatus performs the method according to the first aspect or the second aspect. The memory may be coupled to the processor, or may be independent of the processor.

According to a seventh aspect, a communication apparatus (for example, the communication apparatus may be a chip or a chip system) is provided. The communication apparatus includes a processor, configured to implement the functions in the first aspect or the second aspect.

In some possible designs, the communication apparatus includes a memory, and the memory is configured to store necessary program instructions and/or data.

In a possible design solution, the processor may be integrated with the memory.

In some possible designs, when the apparatus is the chip system, the apparatus may include a chip, or may include the chip and another discrete component.

According to an eighth aspect, a communication apparatus is provided, including a transceiver and a processor. The transceiver is used by the communication apparatus to exchange information with another communication apparatus. The processor executes program instructions to perform the method according to the first aspect or the second aspect.

In a possible design solution, the communication apparatus according to the eighth aspect may further include a memory. The memory may be integrated with the processor, or may be separately disposed. The memory may be configured to store a computer program and/or data related to the method according to the first aspect or the second aspect.

According to a ninth aspect, a communication apparatus is provided. The communication apparatus is configured to perform the method according to the first aspect or the second aspect.

It should be understood that the fifth aspect to the ninth aspect include a corresponding module, unit, or means (means) for implementing the method according to the first aspect or the second aspect. The module, unit, or means may be implemented by hardware, software, or hardware executing corresponding software. The hardware or the software includes one or more modules or units configured to perform functions in the foregoing methods.

It may be understood that, when the communication apparatus provided in any one of the fifth aspect to the ninth aspect is a chip, the foregoing sending action/function may be understood as an output, and the receiving action/function may be understood as an input.

According to a tenth aspect, a computer-readable storage medium is provided. The computer-readable storage medium stores a computer program or instructions. When the computer program or the instructions are run on a communication apparatus, the communication apparatus may be enabled to perform the method according to the first aspect or the second aspect.

According to an eleventh aspect, a computer program product including instructions is provided. When the computer program product runs on a communication apparatus, the communication apparatus may be enabled to perform the method according to the first aspect or the second aspect.

According to a twelfth aspect, a communication system is provided, including the terminal device according to the first aspect and the network device according to the second aspect.

**BRIEF DESCRIPTION OF DRAWINGS**

FIG. 1 is a schematic flowchart of sending an uplink signal based on codebook transmission in an NR system according to an embodiment of this application;

FIG. 2 is a diagram of a non-codebook based transmission process according to an embodiment of this application;

FIG. 3 is a diagram of an architecture of a communication system according to an embodiment of this application;

FIG. 4 is a schematic flowchart of an uplink codebook indication method according to an embodiment of this application;

FIG. 5 is a diagram of a structure of a communication apparatus according to an embodiment of this application; and

FIG. 6 is a diagram of a structure of another communication apparatus according to an embodiment of this application.

**DESCRIPTION OF EMBODIMENTS**

To better understand embodiments of this application, the following several items are described before embodiments of this application.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, there are many manners of indicating the to-be-indicated information, for example, but not limited to, the following manners: The to-be-indicated information may be directly indicated, for example, the to-be-indicated information or an index of the to-be-indicated information may be indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

In addition, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device. The configuration information may include, for example, but not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, it should be further understood that numbers such as "first" and "second" in embodiments of this application are merely for differentiation for ease of description, and are not intended to limit the scope of embodiments of this application, for example, for distinguishing between different indication information. For another example, a first network area and a second network area are merely intended to distinguish between different areas, and are not intended to limit a sequence thereof. A person skilled in the art may understand that the terms such as "first" and "second" do not limit a number or an execution sequence, and the terms such as "first" and "second" do not indicate a definite difference.

Third, in embodiments of this application, "predefine" or "preconfigure" may be implemented by prestoring corresponding code or a corresponding table on a device (for example, including a terminal device and a network device), or may be implemented in another manner of indicating related information. A specific implementation thereof is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, a "protocol" in embodiments of this application may be a standard protocol in the communication field, for example, may include a long term evolution (long term evolution, LTE) protocol, an NR protocol, and a related protocol applied to a future communication system. This is not limited in this application.

Fifth, in embodiments of this application, "information (information)", "signal (signal)", "message (message)", "channel (channel)", and "signaling (signaling)" may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

Sixth, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation, and do not mean any other limitation.

Seventh, in embodiments of this application, unless otherwise specified, "/" indicates that associated objects are in an "or" relationship. For example, A/B may indicate A or B. "And/or" in embodiments of this application merely describes an association relationship between the associated objects, and indicates that three relationships may exist. For example, A and/or B may indicate the following cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. It should be understood that in embodiments of this application, sequence numbers of processes do not mean an order of execution. The sequence of execution of the processes should be determined based on functions and internal logic of the processes, and should not constitute any limitation on an implementation process of embodiments of this application.

In addition, in embodiments of this application, terms such as "example" or "for example" represents giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Eighth, the technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5G mobile communication system, for example, a NR system, and a future communication system, for example, a 6G mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Finally, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding, the following first describes related technologies in embodiments of this application.

I. MIMO Technology

The MIMO technology is a technology for sending and receiving signals through a plurality of antennas in the wireless communication field. The network device and the terminal device may obtain a power gain, a spatial diversity (spatial diversity) gain, a spatial multiplexing (spatial multiplexing) gain, and the like by using the MIMO technology. The spatial diversity may mean that signal redundancy is introduced in space to achieve an objective of diversity. For example, the terminal device sends, through two antennas, two data streams that are orthogonal to each other, to obtain a diversity gain. Spatial multiplexing may mean that each antenna sends a plurality of independent data streams on a same time-frequency resource, to improve spectral efficiency without increasing spectrum resources. For example, the terminal device may split uplink data into two independent data streams through layer mapper (layer mapper), and simultaneously send the two data streams through a plurality of antennas, so that space domain resources on a same time-frequency resource can be multiplexed.

It may be understood that, in embodiments of this application, a number of layers is equal to a number of independent data streams. This is uniformly described herein, and details are not described below again.

II. Antenna port (antenna port)

The antenna port defines a channel on a symbol. The antenna port is a logical concept. One antenna port may correspond to one transmit antenna, or may correspond to a plurality of transmit antennas. The antenna port may be distinguished by using a reference signal (reference signal, RS) (which may also be referred to as a pilot). Over downlink (a link on which the network device sends a signal to the terminal device), downlinks are in a one-to-one correspondence with downlink reference signals. Over uplink (a link on which the terminal device sends a signal to the network device), uplinks are in a one-to-one correspondence with uplink reference signals. If one reference signal is transmitted through a plurality of antennas, the plurality of antennas correspond to a same antenna port. If two different reference signals are transmitted through a same antenna, the antenna corresponds to two independent antenna ports.

For example, an antenna port corresponding to a de-modulation reference signal (de-modulation reference signal, DMRS) may be referred to as a DMRS port, an antenna port corresponding to a downlink channel state information reference signal (channel state information reference signal, CSI-RS) may be referred to as a CSI-RS port, and an antenna port corresponding to an uplink sounding reference signal (sounding reference signal, SRS) may be referred to as an SRS port. The CSI-RS is used for channel state information (channel state information, CSI) measurement of a downlink channel, and the SRS is used for CSI measurement of an uplink channel.

Optionally, in embodiments of this application, a channel through which a signal sent through the antenna port passes may be estimated by using a reference signal corresponding to the antenna port. Table 1 shows an example of correspondences between some reference signals and antenna port index values in an NR system. It may be understood that antenna port index values in Table 1 are merely an example, and may alternatively be other index values. This is not specifically limited in embodiments of this application.

Table 1

| Reference signals | Antenna port index values |
|---|---|
| Physical downlink shared channel (physical downlink shared channel, PDSCH) DMRS | 1000 to 1011 |
| Physical downlink control channel (physical downlink control channel, PDCCH) DMRS | 2000 |
| CSI-RS | 3000 to 3031 |
| Physical uplink shared channel (physical uplink shared channel, PUSCH) DMRS | 1000 to 1003 |
| Physical uplink control channel (physical uplink control channel, PUCCH) DMRS | 2000 |
| SRS | 1000 to 1003 |

Refer to Table 1. In the NR system, the PDSCH DMRS may support 12 antenna ports. A number of layers for sending the PDSCH by the network device is the same as a number of ports of the PDSCH DMRS. In other words, the network device supports transmission of a maximum of 12 PDSCH DMRS symbol streams.

Optionally, in embodiments of this application, the PDSCH is mainly used to transmit downlink data, and may also be used to transmit a system message. For example, the system message may include CSI-RS resource configuration information and/or SRS resource configuration information. The CSI-RS resource configuration information is used by the terminal device to receive a CSI-RS from the network device, and the SRS resource configuration information is used by the terminal device to send an SRS to the network device.

Refer to Table 1 again. In the NR system, the PDCCH DMRS may support one antenna port. The PDCCH is used to transmit downlink control information (downlink control information, DCI). The DCI includes scheduling information that is of the PDSCH and that is received by the terminal device and uplink scheduling grant information obtained by the network device by measuring the SRS. For example, the uplink scheduling grant information may include PUSCH resource allocation, a transmission precoding matrix indicator (transmission precoding matrix indicator, TPMI), a number of transmission layers, an SRS resource indicator (SRS resource indicator, SRI), DMRS port indication information, or the like.

Optionally, in embodiments of this application, the TPMI is used in a transmission solution in which the terminal device sends an uplink signal in a codebook (codebook) based transmission scheme. The TPMI corresponds to a precoding matrix in a codebook set. The SRI is used in a transmission solution in which the terminal device sends an uplink signal in a non-codebook based transmission scheme. The SRI may be associated with a non-quantized precoding matrix.

It should be understood that related concepts such as "codebook", "precoding matrix", "codebook based transmission scheme", and "non-codebook based transmission scheme" are specifically described in the following descriptions of related terms, and are not further described herein.

Refer to Table 1 again. The CSI-RS may support 32 antenna ports (including 1, 2, 4, 8, 12, 16, 24, and 32 antenna ports). For example, the network device sends a CSI-RS to the terminal device. Correspondingly, the terminal device receives the CSI-RS from the network device. The terminal device may perform channel estimation on the CSI-RS to obtain CSI, and report the CSI to the network device through a PUSCH or a PUCCH.

Refer to Table 1 again. Both the PUSCH DMRS and the SRS may support four antenna ports (including 1, 2, or 4 antenna ports). In other words, the terminal device may support transmission of four independent SRS symbol streams or PUSCH DMRS symbol streams.

III. Uplink transmission solution in the NR System

The terminal device may transmit an uplink signal by using the MIMO technology, to obtain a multi-antenna processing gain. The uplink transmission solution in the NR system includes a transmission solution in which an uplink signal is sent in the codebook based transmission scheme, or a transmission solution in which an uplink signal is sent in the non-codebook based transmission scheme.

1. Codebook based uplink transmission

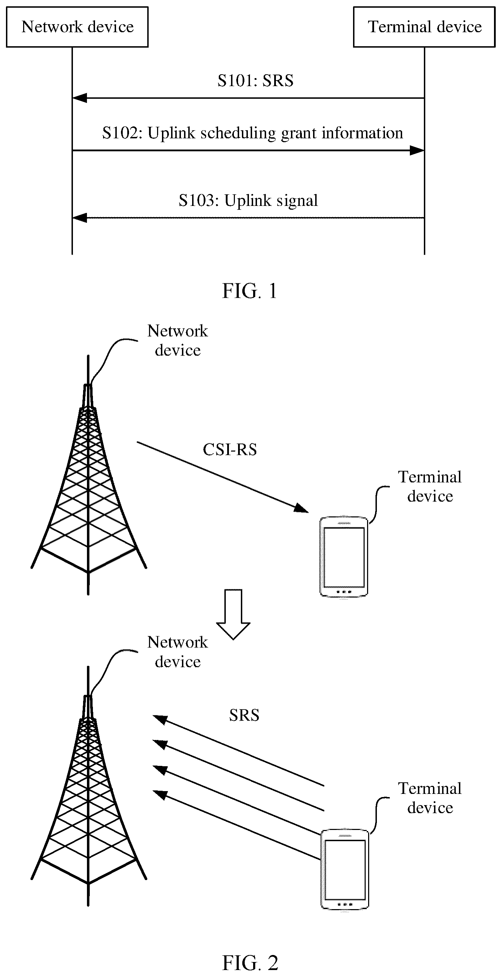

In the codebook based transmission scheme, a precoding matrix used by the terminal device is obtained from a specific codebook, and the specific codebook may be preconfigured. As shown in FIG. 1, a procedure of sending an uplink signal based on codebook transmission in an NR system includes the following steps.

S101: A terminal device sends an SRS to a network device. Correspondingly, the network device receives the SRS from the terminal device.

S102: The network device sends uplink scheduling grant information to the terminal device. Correspondingly, the terminal device receives the uplink scheduling grant information from the network device.

For example, the network device may measure the SRS from the terminal device to obtain uplink channel information, and determine the uplink scheduling grant information based on the uplink channel information. The uplink scheduling grant information may be carried in downlink control information (downlink control information, DCI). The uplink scheduling grant information may include information such as a TPMI, a transmission rank indicator (transmission rank indicator, TRI), or an SRI.

The TPMI indicates a precoding matrix that is selected by the network device from a preconfigured codebook (codebook) and that is used for uplink transmission. The TRI indicates a number of uplink transmission layers (namely, a rank). The SRI indicates to select a specific SRS resource from a plurality of SRS resources (SRS resources).

Optionally, the TPMI and the TRI may be indicated to the terminal device by using a precoding information and number of layers field in the DCI.

S103: The terminal device sends an uplink signal to the network device based on the uplink scheduling grant information. Correspondingly, the network device receives the uplink signal from the terminal device.

Optionally, the terminal device may determine a corresponding uplink precoding matrix from the preconfigured codebook based on the TPMI, the SRI, and the TRI. Then, the terminal device may precode the uplink signal based on the uplink precoding matrix.

For example, the uplink scheduling grant information is described by using an example in which the network device configures two SRS resources for the terminal device. The two SRS resources include a same number of SRS ports. The network device selects an optimal uplink precoding matrix and an optimal number of uplink transmission layers by measuring channels corresponding to the two SRS resources (for example, performing SVD decomposition on the SRS port), and indicates, to the terminal device by using the SRI in the DCI, an SRS resource corresponding to the selected uplink precoding matrix.

Optionally, in S101, the terminal device may separately send, by using different beams (for example, analog beams), SRSs corresponding to the plurality of SRS resources. Correspondingly, selecting an SRS resource by the network device (for example, indicating the selected SRS resource by using the SRI) is equivalent to selecting an uplink transmit beam. It may be understood that, when the network device configures one SRS resource for the terminal device, the uplink precoding matrix selected by the network device corresponds to the SRS resource, and the uplink scheduling grant information sent by the network device to the terminal device in S102 may not include the SRI.

Optionally, in embodiments of this application, the uplink signal may be carried on a PUSCH. DMRS of the PUSCH and data of the PSUCH are precoded by using a same precoding matrix. For example, the terminal device may precode the data of the PUSCH according to the following formula: $V \begin{bmatrix} y^0(i) \\ y^1(i) \\ \cdots \\ y^{v-1}(i) \end{bmatrix} = \begin{bmatrix} z^{p_0}(i) \\ z^{p_1}(i) \\ \cdots \\ z^{p_{k-1}}(i) \end{bmatrix}$.

$[y^0(i), y^1(i), \ldots, y^{v-1}(i)]^T$ represents a matrix corresponding to a symbol of the data of the PUSCH, v represents a number of uplink transmission layers (namely, a number of layers of the data of the PUSCH) indicated by the network device, $i$ represents a $i^{th}$ data symbol of the data of the PUSCH, and a precoding matrix $V$ is a precoding matrix corresponding to the TPMI. Multiplying the precoding matrix $V$ with $[y^0(i), y^1(i), \ldots, y^{v-1}(i)]^T$ represents precoding the data of the PUSCH. $[z^{p_0}(i), z^{p_1}(i), \ldots, z^{p_{k-1}}(i)]^T$ represents data that is mapped to a port $p_n$ after being precoded, where $n = 0, 1, \ldots, k-1$.

If precoding (or analog beamforming) is performed on the SRS sent by the terminal device, after precoding the PUSCH according to the foregoing formula, the terminal device further needs to perform further processing through SRS precoding.

2. Non-codebook based uplink transmission

A difference between the non-codebook based transmission solution and the codebook based transmission solution lies in that a precoding matrix in the non-codebook based transmission solution is no longer limited to a limited candidate set of the specific codebook. The terminal device determines an uplink precoding matrix based on channel reciprocity (for example, channel reciprocity in a time division duplex (time division duplex, TDD) system). If uplink and downlink channel reciprocity exists, the terminal device may estimate an uplink channel by using a downlink reference signal (for example, a CSI-RS), and obtain an uplink precoding matrix by using an algorithm like SVD for the estimated uplink channel.

The procedure of sending an uplink signal based on codebook transmission in an NR system shown in FIG. 1 is used as an example. A difference between sending an uplink signal based on non-codebook transmission and sending an uplink signal based on codebook transmission in the NR system lies in the following.

(1) In S101, the terminal device sends a precoded SRS to the network device. To be specific, in the solution in which an uplink signal is sent based on non-codebook transmission in the NR system, the terminal device measures a CSI-RS from the network device to obtain an uplink precoding matrix, and the terminal device separately precodes an SRS based on a plurality of precoding vectors in the uplink precoding matrix, to obtain a precoded SRS, and sends the precoded SRS to the network device.

(2) In S102, the uplink scheduling grant information does not include a TPMI. Further, in S103, the terminal device may determine a corresponding uplink precoding matrix from the preconfigured codebook based on the SRI and the TRI in the uplink scheduling grant information. Then, the terminal device may precode the uplink signal based on the uplink precoding matrix.

For example, a diagram of a non-codebook based transmission process shown in FIG. 2 is used as an example to describe how the terminal device determines the precoding matrix for sending the uplink signal. As shown in FIG. 2, it is assumed that the uplink precoding matrix obtained by the terminal device based on the CSI-RS includes four precoding vectors, and the network device configures four SRS resources for the terminal device. The terminal device may separately precode the four SRS resources and then send the precoded four SRS resources. Correspondingly, the network device receives the SRS sent by the terminal device. The four SRS resources are in a one-to-one correspondence with the four precoding vectors. For example, an SRS resource #0 corresponds to a precoding vector #0, an SRS resource #1 corresponds to a precoding vector #1, an SRS resource #2 corresponds to a precoding vector #2, and an SRS resource #3 corresponds to a precoding vector #3. If the network device measures the SRS sent by the terminal device, and selects the SRS resource #0 and the SRS resource #1, the SRI in the uplink scheduling grant information sent by the network device indicates the SRS resource #0 and the SRS resource #1. Then, the terminal device may determine, based on the SRS indication, that the precoding matrix for sending the uplink signal includes the precoding vector #0 and the precoding vector #1.

IV. 4Tx codebook

In a codebook based uplink transmission scheme, the 3GPP NR R16 protocol (3GPP TS 38.212 V16.7.0) defines codebooks (referred to as 4Tx codebooks for short) used when numbers of transmit antenna ports of the terminal device are 2Tx and 4Tx, and precoding matrices in different codebooks may respectively support one-layer uplink transmission to four-layer uplink transmission. A coherent capability of the terminal device is considered in the codebook, and the coherent capability includes a fully-coherent (fully-coherent) capability, a partially-coherent (partially-coherent) capability, and a non-coherent (non-coherent) capability. The fully-coherent capability means that coherent transmission can be performed by using all antenna ports, and correspondingly, a used precoding matrix is specifically represented as that all elements in each column in the precoding matrix are non-zero. The partially-coherent capability means that coherent transmission can be performed by using a part of antenna ports. For example, antenna ports {1, 3} and {2, 4} in the 4Tx codebook form two coherent transmission groups, coherent transmission can be performed by using antenna ports in a same coherent transmission group, and coherent transmission cannot be performed by using antenna ports in different coherent transmission groups. Correspondingly, a used precoding matrix is specifically represented as that elements at locations corresponding to antenna ports in different coherent transmission groups in each column in the precoding matrix cannot be all non-zero. The non-coherent capability means that coherent transmission cannot be performed by using any two antenna ports, and correspondingly, a used precoding matrix is specifically represented as that each column in the precoding matrix has only one non-zero element.

For example, the following Table 2 shows a precoding matrix **W** used when single-layer transmission using four antenna ports is performed, namely, a precoding matrix used for transmission using four antenna ports when v=1. Different TPMI indexes (indexes) correspond to different precoding matrices **W,** where TPMIs 0 to 3 correspond to non-coherent precoding matrices, TPMIs 4 to 11 correspond to partially-coherent precoding matrices, and TPMIs 12 to 27 correspond to fully-coherent precoding matrices.

Table 2

| TPMI indexes | Precoding matrices (W) (The TPMI indexes are increased from left to right.) | | | | | | | |
|---|---|---|---|---|---|---|---|---|
| 0 to 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 to 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 to 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 to 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

For example, Table 3 shows a precoding matrix **W** used when two-layer transmission using four antenna ports is performed, namely, a precoding matrix used for transmission using four antenna ports when v=2. TPMIs 0 to 5 correspond to non-coherent precoding matrices, TPMIs 6 to 13 correspond to partially-coherent precoding matrices, and TPMIs 14 to 21 correspond to fully-coherent precoding matrices.

Table 3

| TPMI indexes | Precoding matrices (W) (The TPMI indexes are increased from left to right.) | | | |
|---|---|---|---|---|
| 0 to 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 to 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 to 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 to 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 to 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 and 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

For example, Table 4 shows a precoding matrix **W** used when three-layer transmission using four antenna ports is performed, namely, a precoding matrix used for transmission using four antenna ports when v=3.

Table 4

| TPMI index es | Precoding matrices (W) (The TPMI indexes are increased from left to right.) | | | |
|---|---|---|---|---|
| 0 to 3 | $\dfrac{1}{2}\begin{bmatrix} 1 & 0 & 0 \\ 0 & 1 & 0 \\ 0 & 0 & 1 \\ 0 & 0 & 0 \end{bmatrix}$ | $\dfrac{1}{2}\begin{bmatrix} 1 & 0 & 0 \\ 0 & 1 & 0 \\ 1 & 0 & 0 \\ 0 & 0 & 1 \end{bmatrix}$ | $\dfrac{1}{2}\begin{bmatrix} 1 & 0 & 0 \\ 0 & 1 & 0 \\ -1 & 0 & 0 \\ 0 & 0 & 1 \end{bmatrix}$ | $\dfrac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4 to 6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

For example, Table 5 shows a precoding matrix **W** used when four-layer transmission using four antenna ports is performed, namely, a precoding matrix used for transmission using four antenna ports when v=4.

Table 5

| TPMI index es | Precoding matrices (W) (The TPMI indexes are increased from left to right.) | | | |
|---|---|---|---|---|
| 0 to 3 | $\dfrac{1}{2}\begin{bmatrix}1&0&0&0\\0&1&0&0\\0&0&1&0\\0&0&0&1\end{bmatrix}$ | $\dfrac{1}{2\sqrt{2}}\begin{bmatrix}1&1&0&0\\0&0&1&1\\1&-1&0&0\\0&0&1&-1\end{bmatrix}$ | $\dfrac{1}{2\sqrt{2}}\begin{bmatrix}1&1&0&0\\0&0&1&1\\j&-j&0&0\\0&0&j&-j\end{bmatrix}$ | $\dfrac{1}{4}\begin{bmatrix}1&1&1&1\\1&-1&1&-1\\1&1&-1&-1\\1&-1&-1&1\end{bmatrix}$ |
| 4 to 6 | $\dfrac{1}{4}\begin{bmatrix}1&1&1&1\\1&-1&1&-1\\j&j&-j&-j\\j&-j&-j&j\end{bmatrix}$ | - | - | - |

EP 4 661 348 A1

Therefore, based on the precoding matrix used by the terminal device with four antenna ports for uplink transmission shown in Table 2 to Table 5, the network device may select an appropriate number of uplink transmission layers based on the uplink channel information obtained through measurement, and select an appropriate precoding matrix from a codebook corresponding to the number of uplink transmission layers, to indicate the determined number of uplink transmission layers and the TPMI index to the terminal device by using the DCI.

Correspondingly, after obtaining the DCI, the terminal device may search the following Table 6 for a TRI and a TPMI based on a value indicated by the precoding information and number of layers field in the DCI and an RRC parameter, to determine a codebook in the foregoing Table 2 to Table 5 based on the number of SRS ports and the TRI, and to further determine a precoding matrix from the codebook based on the TPMI. The precoding matrix is a precoding matrix that is configured by the network device and that is used for uplink transmission.

For example, Table 6 shows a correspondence between a value indicated by the precoding information and number of layers field and different codebook subsets. The correspondence is applicable to a scenario in which transform precoding is disabled, there are four antenna ports, a maximum number of layers is 2, 3, or 4, and a power mode is not configured or is set to full power mode 2. For example, if the precoding information and number of layers field is 001001, a corresponding value is 9. If the RRC parameter is codebookSubset=fullyAndPartialAndNonCoherent, the terminal device may find, in the following Table 6, that a number of uplink transmission layers is 2 (namely, TRI=2) and TPMI=5, and then determine a codebook from the codebooks shown in the foregoing Table 2 to Table 5 based on a number of SRS ports and the TRI. For example, if the number of SRS ports is 4, it is determined that the codebook of the precoding matrix is the codebook shown in Table 3, and it may be further determined, based on TPMI=5, that the precoding matrix is $\dfrac{1}{2}\begin{bmatrix} 0 & 0 \\ 0 & 0 \\ 1 & 0 \\ 0 & 1 \end{bmatrix}$.

Table 6

| Domain mapped to index (Bit field mapped to index) | Codebook subset=fully, partially, and non-coherent (codebookSubset= fullAndPartialAnd NonCoherent) | Bit field mapped to index (Bit field mapped to index) | Codebook subset=partially and non-coherent (codebookSubset=Partial AndNonCoherent) | Bit field mapped to index (Bit field mapped to index) | Codebook subset=non-coherent (codebookSubset =NonCoherent) |
|---|---|---|---|---|---|
| 0 | One layer: TPMI=0 | 0 | One layer: TPMI=0 | 0 | One layer: TPMI=0 |
| 1 | One layer: TPMI=1 | 1 | One layer: TPMI=1 | 1 | One layer: TPMI=1 |
| ... | ... | ... | ... | ... | ... |
| 3 | One layer: TPMI=3 | 3 | One layer: TPMI=3 | 3 | One layer: TPMI=3 |
| 4 | Two layers: TPMI=0 | 4 | Two layers: TPMI=0 | 4 | Two layers: TPMI=0 |
| ... | ... | ... | ... | ... | ... |
| 9 | Two layers: TPMI=5 | 9 | Two layers: TPMI=5 | 9 | Two layers: TPMI=5 |
| 10 | Three layers: TPMI=0 | 10 | Three layers: TPMI=0 | 10 | Three layers: TPMI=0 |
| 11 | Four layers: TPMI=0 | 11 | Four layers: TPMI=0 | 11 | Four layers: TPMI=0 |
| 12 | One layer: TPMI=11 | 12 | One layer: TPMI=4 | 12 to 15 | Reserved (reserved) |
| ... | ... | ... | ... | | |
| 19 | One layer: TPMI=11 | 19 | One layer: TPMI=11 | | |
| 20 | Two layers: TPMI=6 | 20 | Two layers: TPMI=6 | | |
| ... | ... | ... | ... | | |
| 27 | Two layers: TPMI=13 | 27 | Two layers: TPMI=13 | | |

(continued)

| Domain mapped to index (Bit field mapped to index) | Codebook subset=fully, partially, and non-coherent (codebookSubset= fullAndPartialAnd NonCoherent) | Bit field mapped to index (Bit field mapped to index) | Codebook subset=partially and non-coherent (codebookSubset=Partial AndNonCoherent) | Bit field mapped to index (Bit field mapped to index) | Codebook subset=non-coherent (codebookSubset =NonCoherent) |
|---|---|---|---|---|---|
| 28 | Two layers: TPMI=1 | 28 | Three layers: TPMI=1 | | |
| 29 | Three layers: TPMI=2 | 29 | Three layers: TPMI=2 | | |
| 30 | Four layers: TPMI=1 | 30 | Four layers: TPMI=1 | | |
| 31 | Four layers: TPMI=2 | 31 | Four layers: TPMI=2 | | |
| 32 | One layer: TPMI=12 | | | | |
| ... | | | | | |
| 47 | One layer: TPMI=27 | | | | |
| 48 | Two layers: TPMI=14 | | | | |
| ... | ... | | | | |
| 55 | Two layers: TPMI=21 | | | | |
| 56 | Three layers: TPMI=3 | | | | |
| ... | | | | | |
| 59 | Three layers: TPMI=6 | | | | |
| 60 | Four layers: TPMI=3 | | | | |
| 61 | Four layers: TPMI=4 | | | | |
| 62 and 63 | Reserved (reserved) | | | | |

V 2Tx codebook

The 2Tx codebook defines a precoding matrix used to perform uplink precoding on two antenna ports when there is one or two uplink transmission layers. For example, the following Table 7 shows a precoding matrix **W** used when single-layer transmission using two antenna ports is performed, namely, a precoding matrix used for transmission using two antenna ports when v=1.

Table 7

| TPMI indexes | Precoding matrices (W) (The TPMI indexes are increased from left to right.) | | | | | | | |
|---|---|---|---|---|---|---|---|---|
| 0 to 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

For example, the following Table 8 shows a precoding matrix **W** used when two-layer transmission using two antenna ports is performed, namely, a precoding matrix used for transmission using two antenna ports when v=2.

Table 8

| TPMI indexes | Precoding matrices (W) (The TPMI indexes are increased from left to right.) | | | |
|---|---|---|---|---|
| 0 to 2 | $\frac{1}{\sqrt{2}}\begin{bmatrix}1 & 0\\0 & 1\end{bmatrix}$ | $\frac{1}{\sqrt{2}}\begin{bmatrix}1 & 1\\1 & -1\end{bmatrix}$ | $\frac{1}{\sqrt{2}}\begin{bmatrix}1 & 1\\j & -j\end{bmatrix}$ | - |

Currently, in codebook based uplink transmission, the protocol defines only a codebook for terminal devices with numbers of transmit antenna ports being 2Tx and 4Tx, to enable codebook based uplink transmission. In other words, a maximum number of uplink transmission layers supported by each terminal device is 4, and the terminal device cannot support uplink transmission using more transmit antenna ports (for example, 8Tx transmit antenna ports), and more transmission layers (for example, more than four layers). Therefore, how to enable a terminal device with more transmit antenna ports to perform uplink transmission becomes an urgent problem to be resolved.

In view of this, an embodiment of this application provides an uplink codebook indication method, to enable a terminal device with more than four transmit antenna ports to perform uplink transmission.

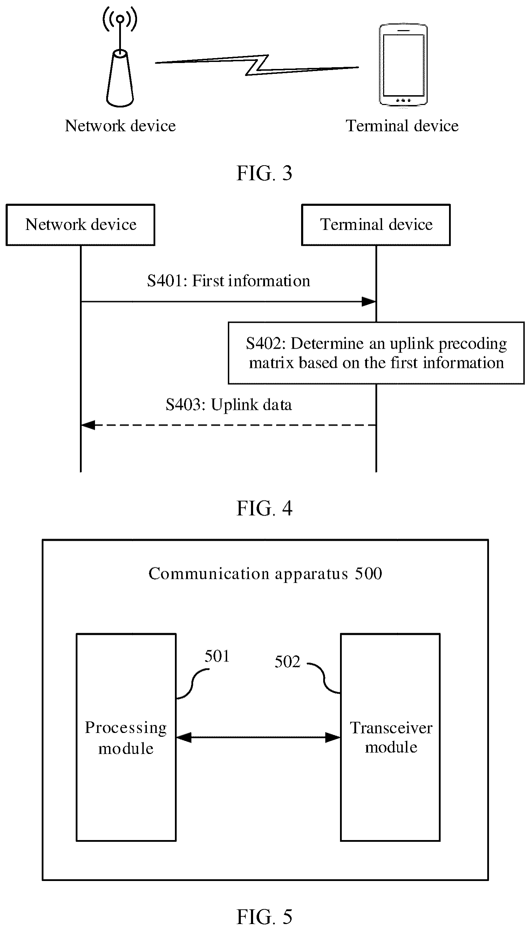

For example, FIG. 3 is a diagram of an architecture of a communication system according to an embodiment of this application. As shown in FIG. 3, the communication system includes a network device and a terminal device. The network device and the terminal device may directly communicate with each other, or may communicate with each other through forwarding by another device. It should be noted that FIG. 3 shows one network device and one terminal device as an example. A number of network devices and a number of terminal devices are not limited in embodiments of this application.

In embodiments of this application, a plurality of antennas may be configured for each communication device, for example, the network device or the terminal device. The plurality of antennas may include at least one transmit antenna configured to send a signal and at least one receive antenna configured to receive a signal. In addition, each communication device additionally includes a transmitter chain and a receiver chain. A person of ordinary skill in the art may understand that the transmitter chain and the receiver chain each may include a plurality of components related to signal sending and receiving (for example, a processor, a modulator, a multiplexer, a demodulator, a demultiplexer, or an antenna). Therefore, the network device may communicate with the terminal devices by using a multi-antenna technology.

In embodiments of this application, the network device is a device that is located on a network side of the communication system and has a wireless transceiver function, or a chip or a chip system that may be disposed in the device. The network device includes but is not limited to: an access point (access point, AP) in a Wi-Fi system, for example, a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP, or transmission point, TP), or the like. The network device may alternatively be a gNB or a transmission point (TRP or TP) in a 5G system, for example, an NR system, one base station or a group of base stations (including a plurality of antenna panels) in a 5G system. The network device may alternatively be a network node, for example, a baseband unit (BBU), a distributed unit (distributed unit, DU), or a road side unit (road side unit, RSU) having a base station function, that constitutes a gNB or a transmission point.

The terminal device in embodiments of this application is a terminal that accesses the foregoing communication system and has a wireless transceiver function, or a chip or a chip system that may be disposed in the terminal. The terminal device may also be referred to as a user apparatus, an access terminal, a subscriber unit, a subscriber station, a mobile station, a mobile console, a remote station, a remote terminal, a mobile device, a user terminal, a terminal, a wireless communication device, a user agent or a user apparatus. The terminal device in embodiments of this application may be a mobile phone (mobile phone), a tablet computer (Pad), a computer that has a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the method provided in this application.

It should be noted that, the uplink codebook indication method provided embodiments of this application is applicable to the terminal device and the network device shown in FIG. 3. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 3 is merely a simplified diagram of an example for ease of understanding. The communication system may further include another network device and/or another terminal device that are/is not shown in FIG. 3.

The following describes in detail the uplink codebook indication method provided in embodiments of this application with reference to FIG. 4.

For example, FIG. 4 is a schematic flowchart of an uplink codebook indication method according to an embodiment of this application. The uplink codebook indication method is applicable to the communication system shown in FIG. 3.

As shown in FIG. 4, the uplink codebook indication method includes the following steps.

S401: A network device sends first information to a terminal device. Correspondingly, the terminal device receives the first information from the network device.

In this embodiment of this application, the first information indicates an uplink precoding matrix with 2N rows and L columns, where a number 2N of rows of the uplink precoding matrix is a number of antenna ports of the terminal device, and a number L of columns of the uplink precoding matrix is an uplink transmission layer. In other words, in this embodiment of this application, the uplink precoding matrix may be used by the terminal device with 2N antenna ports to perform precoding for L-layer uplink transmission. The uplink precoding matrix may be determined by the network device based on information about an uplink channel between the network device and the terminal device, a coherent transmission capability of the terminal device, and the like. N and L are positive integers.

In this embodiment of this application, a type of the uplink precoding matrix may be a first partially-coherent precoding matrix, a second partially-coherent precoding matrix, or a non-coherent precoding matrix. The first partially-coherent precoding matrix represents that the 2N antenna ports are divided into two groups for coherent transmission, and an uplink precoding matrix of the first partially-coherent precoding matrix type is used to perform uplink precoding on the 2N antenna ports that are divided into two groups for coherent transmission. For example, the terminal device has eight antenna ports, that is, 2N=8. In this case, the eight antenna ports of the terminal device are divided into two groups, each group includes four antenna ports, and the four antenna ports in the group may be used to perform coherent transmission. In other words, the terminal device with eight antenna ports has a first partially-coherent transmission capability. The second partially-coherent precoding matrix represents that the 2N antenna ports are divided into four groups for coherent transmission, and an uplink precoding matrix of the second partially-coherent precoding matrix type is used to perform uplink precoding on the 2N antenna ports that are divided into four groups for coherent transmission. For example, if 2N=8, the eight antenna ports of the terminal device are divided into four groups, each group includes two antenna ports, and the two antenna ports in the group may be used to perform coherent transmission. In other words, the terminal device with eight antenna ports has a second partially-coherent transmission capability. An uplink precoding matrix of the non-coherent precoding matrix type is used to perform uplink precoding on the 2N antenna ports, among which any two antenna ports cannot be used for coherent transmission. The terminal device with eight antenna ports has a non-coherent transmission capability.

It should be noted that the uplink precoding matrix in this embodiment of this application mainly relates to an uplink precoding matrix used for partially-coherent transmission and non-coherent transmission. In some possible cases, the uplink precoding matrix may alternatively be of the fully-coherent precoding matrix type, and is used by a terminal device that has a fully-coherent transmission capability and has 2N antenna ports to perform uplink precoding. This is not specifically limited in embodiments of this application.

It can be learned that the coherent transmission capability of the terminal device may include a fully-coherent transmission capability, a first partially-coherent transmission capability, a second partially-coherent transmission capability, or a non-coherent transmission capability. In this embodiment of this application, the terminal device may send the coherent transmission capability of the terminal device to the network device, so that the network device may determine, based on the coherent transmission capability reported by the terminal device, an uplink precoding matrix of a corresponding type for the terminal device.

In a possible case, in addition to an uplink precoding matrix used for a corresponding capability level, a terminal device with a high coherent transmission capability may further use an uplink precoding matrix corresponding to a low coherent transmission capability level. In other words, it may be considered that a terminal device that supports a high coherent transmission capability may use an uplink precoding matrix of a low coherent precoding matrix type. For example, if the terminal device has the fully-coherent transmission capability, the terminal device may perform uplink precoding by using an uplink precoding matrix of the fully-coherent precoding matrix type, the first partially-coherent precoding matrix type, the second partially-coherent precoding matrix type, or the non-coherent precoding matrix type. For another example, if the terminal device has the first partially-coherent transmission capability, the terminal device may perform uplink precoding by using an uplink precoding matrix of the first partially-coherent precoding matrix type, the second partially-coherent precoding matrix type, or the non-coherent precoding matrix type.

In another possible case, terminal devices with different types of coherent transmission capabilities may use only first uplink precoding matrices corresponding to the coherent transmission capabilities. For example, if the terminal device has the first partially-coherent transmission capability, the terminal device may perform uplink precoding only by using the uplink precoding matrix of the first partially-coherent precoding matrix type.

For example, the uplink precoding matrix in this embodiment of this application may be represented as one of the following three structures.

Structure 1: $W = \begin{bmatrix} P_1 & 0 \\ 0 & P_2 \end{bmatrix}$, where $W$ is a 2N×L uplink precoding matrix, $P_1$ is an N×K first submatrix, $P_2$ is an N×M second submatrix, and L=K+M. It should be understood that orthogonality of the uplink precoding matrix is considered in the structure 1.

Structure 2: $W = \begin{bmatrix} P_1 \\ 0 \end{bmatrix}$, where L=K.

Structure 3: $W = \begin{bmatrix} 0 \\ P_1 \end{bmatrix}$, where L=K.

The first submatrix and the second submatrix in the uplink precoding matrix in the foregoing structure are preconfigured, and uplink precoding matrices of the three structures may be selected based on a number of uplink transmission layers (namely, a rank). For example, if a structure of the uplink precoding matrix is the foregoing structure 1, a number of uplink transmission layers that corresponds to the uplink precoding matrix may be greater than a first threshold and less than or equal to a second threshold. If a first uplink precoding structure is the structure 2 or the structure 3, a number of uplink transmission layers that corresponds to the uplink precoding matrix may be less than or equal to the first threshold.

For example, if N=4, the first threshold is 4, and the second threshold is 8, the number of uplink transmission layers that corresponds to the structure 1 is 4<rank≤8, and the number of uplink transmission layers that corresponds to the structure 2 or the structure 3 is 1≤rank≤4, which is represented as follows:

If 1< r ank<4, $W = \begin{bmatrix} P_1 \\ 0 \end{bmatrix}$ or $W = \begin{bmatrix} 0 \\ P_1 \end{bmatrix}$; or if 4<rank≤8, $W = \begin{bmatrix} P_1 & 0 \\ 0 & P_2 \end{bmatrix}$. Herein, rank is a positive integer.

In this scenario, when the number of uplink transmission layers is rank=2, 3, or 4, the structure of the uplink precoding matrix may also be the foregoing structure 1, that is, may be represented as follows:

If rank=1, $W = \begin{bmatrix} P_1 \\ 0 \end{bmatrix}$ or $W = \begin{bmatrix} 0 \\ P_1 \end{bmatrix}$, if 1<rank≤4, that is, rank=2, 3, or 4, $W = \begin{bmatrix} P_1 \\ 0 \end{bmatrix}$ or $W = \begin{bmatrix} 0 \\ P_1 \end{bmatrix}$ or $W = \begin{bmatrix} P_1 & 0 \\ 0 & P_2 \end{bmatrix}$; or if 4<rank≤8, $W = \begin{bmatrix} P_1 & 0 \\ 0 & P_2 \end{bmatrix}$.

It can be learned that when 1<rank≤4, a number of columns of the uplink precoding matrix including the first submatrix $P_1$ and the second submatrix $P_2$ is 1<K+M=L≤4.

For another example, if N=4, the first threshold is 1, and the second threshold is 8, the number of uplink transmission layers that corresponds to the structure 1 is 1<rank≤8, and the number of uplink transmission layers that corresponds to the structure 2 or the structure 3 is rank=1.

Therefore, the network device may determine a corresponding number of uplink transmission layers and a corresponding uplink precoding matrix based on the information about the uplink channel between the network device and the terminal device and the coherent transmission capability of the terminal device, then determine a structure of the first uplink precoding matrix based on the number of uplink transmission layers, and select, based on the determined uplink precoding matrix, one first submatrix or select one first submatrix and one second submatrix from a preconfigured first submatrix set and a preconfigured second submatrix set, to determine an uplink precoding matrix that is most similar to an uplink precoding matrix obtained through calculation, so as to configure the uplink precoding matrix for the terminal device by using first information.

In a possible design solution, a type of the first submatrix or the second submatrix may be a fully-coherent precoding matrix, a partially-coherent precoding matrix, or a non-coherent precoding matrix. It should be understood that, if the type of the first submatrix or the second submatrix is the fully-coherent precoding matrix, the first submatrix or the second submatrix is used by the terminal device to precode N antenna ports, all of which can be used for coherent transmission. If the type of the first submatrix or the second submatrix is the partially-coherent precoding matrix, the first submatrix or the second submatrix is used by the terminal device to precode N antenna ports, some of which can be used for coherent transmission. If the type of the first submatrix or the second submatrix is the non-coherent precoding matrix, the first submatrix or the second submatrix is used by the terminal device to precode N antenna ports, any two of which cannot be used for coherent transmission.

For example, N=4, and the first submatrix or the second submatrix may be any precoding matrix shown in Table 2 to Table 5. In this case, K∈[1, 4], M∈[1, 4], and K and M are positive integers. Table 2 to Table 5 show 62 precoding matrices with different values, in other words, a number of first submatrices or second submatrices is 62, where there are 30 first submatrices or second submatrices (namely, of the fully-coherent precoding matrix type) used for fully-coherent transmission, there are 20 first submatrices or second submatrices (namely, of the partially-coherent precoding matrix type) used for partially-coherent transmission, and there are 12 first submatrices or second submatrices (namely, of the non-coherent precoding matrix type) used for non-coherent transmission. It can be learned that the first submatrix set or the second submatrix set includes 62 precoding matrices, and the first submatrix set or the second submatrix set includes precoding matrices corresponding to 1 to 4 uplink transmission layers.

In this scenario, the structure of the uplink precoding matrix is the foregoing structure 1, and coherent transmission capabilities that correspond to the first submatrix and the second submatrix in the uplink precoding matrix are the same. In this case, when types of the first submatrix and the second submatrix are the fully-coherent precoding matrix, the type of the uplink precoding matrix is the first partially-coherent precoding matrix; or when types of the first submatrix and the second submatrix are the partially-coherent precoding matrix, the type of the uplink precoding matrix is the second partially-coherent precoding matrix; or when types of the first submatrix and the second submatrix are the non-coherent precoding matrix, the type of the uplink precoding matrix is the non-coherent precoding matrix.

In a possible design solution, coherent transmission capabilities that correspond to the first submatrix and the second submatrix in the uplink precoding matrix may alternatively be different, an uplink precoding matrix including the first submatrix and the second submatrix that have different coherent transmission capabilities may alternatively be of the fully-coherent precoding matrix type, the first partially-coherent precoding matrix type, the second partially-coherent precoding matrix type, or the non-phase coherent precoding matrix type. Details are not described in this embodiment of this application.

In this embodiment of this application, the first information includes first indication information and second indication information.

The first indication information indicates a first submatrix with N rows and K columns in the uplink precoding matrix, the N×K first submatrix is one of preconfigured precoding matrices, and the first submatrix may be used by the terminal device with the N antenna ports to perform precoding for K-layer uplink transmission. In addition, first submatrices with different values correspond to different index values. Therefore, the first indication information may indicate, by using an index, the first submatrix selected by the network device from the first submatrix set.

For example, N=4, and the first submatrix may be any precoding matrix shown in Table 2 to Table 5. In this case, K∈[1, 4], and the first submatrix set includes 62 4×K precoding matrices. Therefore, the first indication information needs at least 62 index values to respectively indicate the 62 first submatrices with different values.

In a possible design solution, index values indicating different first submatrices may be indicated by using bits. For example, the first indication information indicates one (namely, the first submatrix) of the 62 precoding matrices with different values by using 6 bits, and different precoding matrices may be indicated based on a correspondence among first two columns of indexes, a number of layers, and a TPMI in Table 6. 000000 to 001011 respectively indicate index values 0 to 11 corresponding to 12 precoding matrices used for non-coherent transmission; 001100 to 011111 respectively indicate index values 12 to 31 corresponding to 20 precoding matrices used for partially-coherent transmission; 100000 to 111101 respectively indicate index values 32 to 61 corresponding to 30 precoding matrices used for fully-coherent transmission; and the remaining 111110 and 11111 respectively indicate an index value 62 and an index value 63, and the index values 62 and 63 may be used as reserved indexes. Based on this, it is assumed that the first submatrix determined by the network device based on the uplink precoding matrix and the number of uplink transmission layers that are obtained through calculation is a precoding matrix whose TPMI index is 3 in Table 5, namely, $\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$, K=4.

Therefore, an index value indicated by the first indication information is 60.

It should be noted that a number of bits indicating the first submatrix may be determined based on a coherent capability of the terminal device. For example, if a terminal device with a high coherent transmission capability can use an uplink precoding matrix corresponding to a low coherent transmission capability, and the terminal device determines a coherence type of the uplink precoding matrix based on a coherence type of the first submatrix, the number of bits indicating the first submatrix needs to be able to indicate first submatrices of all coherence types. For example, N=4, the terminal device has the fully-coherent transmission capability or the first partially-coherent transmission capability, and the first submatrix may be one of the 62 precoding matrices with different values shown in Table 2 to Table 5. In this case, the number of bits indicating the first submatrix is at least 6. For another example, terminal devices with different coherent transmission capabilities can use only first uplink precoding matrices corresponding to the coherent transmission capabilities. For example, the terminal device with the first partially-coherent transmission capability can use only the uplink precoding matrix of the first partially-coherent precoding matrix type. Alternatively, if a terminal device with a high coherent transmission capability can use an uplink precoding matrix corresponding to a low coherent transmission capability, and when the terminal device determines the coherence type of the uplink precoding matrix by using third indication information, the number of bits indicating the first submatrix needs to indicate a first submatrix of a precoding matrix type. For example, when N=4, and the uplink precoding matrix is the first partially-coherent precoding matrix, the first submatrix may be 30 different-value precoding matrices that are used for fully-coherent transmission and that are shown in Table 2 to Table 5. In this case, the number of bits indicating the first submatrix is at least 5.

It should be understood that the foregoing example is described by using an example in which an order of three types of precoding matrices that can be selected for the first submatrix and that are indicated by index values in ascending order is the non-coherent precoding matrix -> the partially-coherent precoding matrix -> the fully-coherent precoding matrix. In this embodiment of this application, the order of the three types of the precoding matrices that can be selected for the first submatrix and that are indicated by the index values in ascending order is not limited. For example, the order of the three types of the precoding matrices that can be selected for the first submatrix and that are indicated by the index values in ascending order may alternatively be the fully-coherent precoding matrix -> the partially-coherent precoding matrix -> the non-coherent precoding matrix. This is not specifically limited in embodiments of this application.

In addition, for index values of precoding matrices of a same type that can be selected for the first submatrix, precoding matrices with different values may be indicated in ascending order of the index values in ascending order of corresponding numbers of uplink transmission layers. For example, 000000 to 011101 respectively indicate index values 0 to 29 corresponding to 30 precoding matrices used for fully-coherent transmission. Precoding matrices indicated by index values 0 to 15 are precoding matrices whose TPMI indexes are 12 to 27 in Table 2. Precoding matrices indicated by index values 16 to 23 are precoding matrices whose TPMI indexes are 14 to 21 in Table 3. Precoding matrices indicated by index values 24 to 27 are precoding matrices whose TPMI indexes are 3 to 6 in Table 4. Precoding matrices indicated by index values 28 and 29 are respectively precoding matrices whose TPMI indexes are 3 and 4 in Table 5. It should be understood that index values of precoding matrices of a same type may alternatively indicate precoding matrices with different values in descending order of corresponding numbers of uplink transmission layers or in another order. This is not specifically limited in embodiments of this application.

The foregoing example describes a solution in which index values corresponding to precoding matrices of all types that can be selected for the first submatrix are jointly numbered. In addition, index values corresponding to precoding matrix of a same type may alternatively be separately and consecutively numbered, in other words, precoding matrices of different types correspond to different first submatrix sets. This is not specifically limited in embodiments of this application. For example, there are 30 precoding matrices of the fully-coherent precoding matrix type, and the 30 precoding matrices correspond to a first submatrix set 1. In this case, the first indication information may indicate, by using 5 bits, one of index values 0 to 29 corresponding to the 30 precoding matrices of the fully-coherent precoding matrix type. There are 20 precoding matrices of the partially-coherent precoding matrix type, and the 20 precoding matrices correspond to a first submatrix set 2. In this case, the first indication information may indicate, by using 5 bits, one of index values 0 to 19 corresponding to the 20 first submatrices of the partially-coherent precoding matrix type. There are 12 first submatrices of the non-coherent precoding matrix type, and the 12 first submatrices correspond to a first submatrix set 3. In this case, the first indication information may indicate, by using 4 bits, one of index values 0 to 11 corresponding to the 12 first submatrices of the coherent precoding matrix type. All unused index values may be used as reserved indexes. For example, when numbers of bits correspondingly used by precoding matrices in first submatrix sets of different types are the same, types of the first submatrix sets may be distinguished by using reserved indexes or in another manner. This is not specifically limited in embodiments of this application.

In this embodiment of this application, the second indication information indicates a second submatrix with N rows and M columns in the uplink precoding matrix, or the second indication information indicates that the first submatrix is a precoding matrix for first N antenna ports, or the second indication information indicates that the first submatrix is a precoding matrix for last N antenna ports. A function indicated by the second indication information is determined based on a number of uplink transmission layers that is obtained by the network device through calculation and the uplink precoding matrix, and the second indication information is used to distinguish between the indicated functions by indicating different first index values.

For example, when the second indication information indicates the second submatrix with N rows and M columns in the uplink precoding matrix, a first index value indicated by the second indication information is within a first index value range, and L=K+M, in other words, the first uplink precoding structure corresponds to the forging structure 1; or when the second indication information indicates that the first submatrix is the precoding matrix for first N antenna ports, a first index value indicated by the second indication information is within a second index value range, L=K, and the first uplink precoding structure corresponds to the forging structure 2; or when the second indication information indicates that the first submatrix is the precoding matrix for last N antenna ports, a first index value indicated by the second indication information is within a third index value range, and L=K, in other words, the first uplink precoding structure corresponds to the forging structure 3. There is no intersection set between any two of the first index value range, the second index value range, and the third index value range.

In a possible design solution, the second indication information may indicate $2^T$ first index values by using T bits, the first index value range is [0, Q], the second index value range is (Q, J], and the third index value range is (J, $2^T$), where T, Q, and J are positive integers.

The second submatrix is similar to the first submatrix, and second submatrices with different values correspond to different first index values. Therefore, the second indication information may indicate the second submatrix by using the first index value.

In a possible case, there is no requirement on coherent transmission capabilities that correspond to the first submatrix and the second submatrix in the uplink precoding matrix. If N=4, and the second submatrix may alternatively be any precoding matrix shown in Table 2 to Table 5, M∈[1, 4], and the second submatrix set includes 62 4×M precoding matrices. Therefore, the second indication information also needs at least 62 index values to respectively indicate the 62 precoding matrices with different values. In other words, the second indication information may also respectively indicate the 62 precoding matrices by using at least six bits, that is, T=6. 000000 to 111101 respectively indicate first index values corresponding to the 62 precoding matrices with different values. In other words, the first index value range is [0, 61], and Q=61. With the first index values being in [0, 61], for details of a precoding matrix whose type is the fully-coherent precoding matrix corresponding to a specific index value range, a precoding matrix whose type is the partially-coherent precoding matrix corresponding to a specific index value range, a precoding matrix whose type is the non-coherent precoding matrix corresponding to a specific index value range, how to sequentially number precoding matrices of a same type in each index value range, and the like, refer to related descriptions in the first submatrix. Details are not described herein again.

In addition, the remaining 111110 and 111111 respectively indicate a first index value 62 and a first index value 63. When the second indication information indicates that the first submatrix is the precoding matrix for first N antenna ports, the second indication information may indicate that the first index value is 62, in other words, the second index value range is (61, 62], and J=62. When the second indication information indicates that the first submatrix is the precoding matrix for last N antenna ports, the second indication information may indicate that the first index value is 63, in other words, the third index value range is (62, 63] or (62, 64). Alternatively, when the second indication information indicates that the first submatrix is the precoding matrix for first N antenna ports, the second indication information may indicate that the first index value is 63, in other words, the second index value range is (62, 63] or (62, 64). When the second indication information indicates that the first submatrix is the precoding matrix for last N antenna ports, the second indication information may indicate that the first index value is 62, in other words, the third index value range is (61, 62].

For example, N=4, a number of antenna ports of the terminal device is 2N=8, and a number of uplink transmission layers is L=6. In this case, the structure of the uplink precoding matrix determined by the network device based on the number of uplink transmission layers is the foregoing structure 1. In addition, a first submatrix

$$\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ and a second submatrix $$\mathbf{P_2} = \begin{bmatrix} 1 & 0 \\ 0 & 1 \\ 1 & 0 \\ 0 & -j \end{bmatrix}$$ that are determined based on the uplink precoding matrix obtained through calculation are an uplink precoding matrix

$$\mathbf{W} = \begin{bmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 0 \\ 0 & 0 & 0 & 0 & 0 & 1 \\ 0 & 0 & 0 & 0 & 1 & 0 \\ 0 & 0 & 0 & 0 & 0 & -j \end{bmatrix}$$ . It can be learned that the first submatrix is the fully-coherent precoding matrix, and the second submatrix is the partially-coherent precoding matrix. In other words, coherent transmission capabilities that correspond to the first submatrix and the second submatrix in the uplink precoding matrix are different. In addition, the second submatrix $\mathbf{P_2}$ is a precoding matrix whose TPMI index is 6 in Table 3, so that the second indication information indicates the second submatrix with four rows and two columns, and the first index value corresponding to the second submatrix is within 0 to 61, that is, the first index value range is [0, 61]. If the first index value corresponding to the second submatrix in the second submatrix set is 38, the second indication information may indicate, by using 100110, the second submatrix whose first index value is 38, in other words, the first index value indicated by the second indication information is 38.

In another possible case, if requirements on coherent transmission capabilities that correspond to the first submatrix and the second submatrix in the uplink precoding matrix are the same, the second indication information may indicate the second submatrix by using fewer bits, to reduce overheads. For example, N=4, and the terminal device has the first partially-coherent transmission capability. It is assumed that a terminal device with a high coherent transmission capability can use an uplink precoding matrix corresponding to a low coherent transmission capability, and the terminal device determines a coherence type of the uplink precoding matrix based on a coherence type of the first submatrix. In this case, the first submatrix needs to be selected from 62 different precoding matrices, and the first indication information needs 6 bits. If the first submatrix is the fully-coherent precoding matrix, the second submatrix needs to be selected from only 30 different fully-coherent precoding matrices, so that the second indication information requires only 5 bits. In other words, when the coherent capabilities that correspond to the first submatrix and the second submatrix are the same, a number of bits used by the second indication information to indicate the second submatrix is one bit less than a number of bits used by the first indication information to indicate the first submatrix. 00000 to 11101 respectively indicate first index values corresponding to the 30 fully-coherent precoding matrices with different values, in other words, the first index value range is [0, 29], and Q=29. The remaining 11110 and 11111 respectively indicate a first index value 30 and a first index value 31. When the second indication information indicates that the first submatrix is the precoding matrix for first N antenna ports, the second indication information may indicate that the first index value is 30, in other words, the second index value range is (29, 30], and J=30. When the second indication information indicates that the first submatrix is the precoding matrix for last N antenna ports, the second indication information may indicate that the first index value is 31, in other words, the third index value range is (30, 31] or (30, 32]. Alternatively, when the second indication information indicates that the first submatrix is the precoding matrix for first N antenna ports, the second indication information may indicate that the first index value is 31, in other words, the second index value range is (30, 31] or (30, 32]. When the second indication information indicates that the first submatrix is the precoding matrix for last N antenna ports, the second indication information may indicate that the first index value is 30, in other words, the third index value range is (29, 30].

For example, if N=4, the number of antenna ports of the terminal device is 2N=8, the number of uplink transmission layers is L=6, and both the first submatrix and the second submatrix are any precoding matrix shown in Table 2 to Table 5, that is, $K \in [1, 4]$, $M \in [1, 4]$, a structure of the uplink precoding matrix determined by the network device based on the number of uplink transmission layers is the foregoing structure 1, and a first submatrix

$$\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ and a second submatrix $$\mathbf{P_2} = \begin{bmatrix} 1 & 1 \\ j & j \\ 1 & -1 \\ j & -j \end{bmatrix}$$ that are determined based on the uplink precoding matrix obtained through calculation are an uplink precoding matrix

$$\mathbf{W} = \begin{bmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 1 \\ 0 & 0 & 0 & 0 & j & j \\ 0 & 0 & 0 & 0 & 1 & -1 \\ 0 & 0 & 0 & 0 & j & -j \end{bmatrix}$$ . It can be learned that both the first submatrix and the second submatrix are fully-coherent precoding matrices, the second indication information indicates a second submatrix with four rows and two columns in the uplink precoding matrix, and a coherent capability of the second submatrix is the same as that of the first submatrix. Therefore, the second indication information may indicate the second submatrix by using only 5 bits, that is, the 5 bits may indicate all second submatrices of the fully-coherent precoding matrix type, namely, 30 second submatrices of the fully-coherent precoding matrix type. For example, 00000 to 11101 respectively indicate that the first index values are 0 to 29, that is, the first index value range is [0, 29]. If the first index value corresponding to the second submatrix in the second submatrix set is 18, the second indication information may indicate, by using 10010, the second submatrix whose first index value is 18, in other words, the first index value indicated by the second indication information is 18.

In this embodiment of this application, the second indication information indicates that the first submatrix is the precoding matrix for first N antenna ports, or the second indication information indicates that the first submatrix is the precoding matrix for last N antenna ports. It may be understood that there is no second submatrix in the uplink precoding matrix, the second indication information indicates a location of the first submatrix in the uplink precoding matrix, and the location of the first submatrix is also determined by the network device based on the number of uplink transmission layers and the uplink precoding matrix that are obtained through calculation.

For example, if N=4, the number of antenna ports of the terminal device is 2N=8, the number of uplink transmission layers is L=2, and both the first submatrix and the second submatrix are any precoding matrix shown in Table 2 to Table 5, $K \in [1, 4]$, a structure of the first submatrix $\mathbf{P_1} = \begin{bmatrix} 1 & 1 \\ j & j \\ 1 & -1 \\ j & -j \end{bmatrix}$ determined by the network device based on the number of uplink transmission layers and the uplink precoding matrix that are obtained through calculation and a structure of the uplink precoding matrix are the foregoing structure 3, namely, the uplink precoding matrix

$$\mathbf{W} = \begin{bmatrix} 0 & 0 \\ 0 & 0 \\ 0 & 0 \\ 0 & 0 \\ 1 & 1 \\ j & j \\ 1 & -1 \\ j & -j \end{bmatrix}$$

. It can be learned that a number of rows of the uplink precoding matrix is 8, respectively corresponding to 2N antenna ports of the terminal device, and the first submatrix is located in the last four rows of the uplink precoding matrix, in other words, the first submatrix is used to precode the last N antenna ports in the 2N antenna ports, and the first submatrix is a precoding matrix whose TPMI index is 16 in Table 3. If an index value corresponding to the first submatrix in the first submatrix set is 18, the first indication information may indicate, by using 010010, that the index value is 18, and the second indication information may indicate, by using 111111, that the first index value is 63, to indicate the uplink precoding matrix of the foregoing structure to the terminal device. It should be understood that, if the first submatrix is the precoding matrix for first N antenna ports, the first submatrix is located in the first four rows of the uplink precoding matrix, namely, an uplink precoding matrix $\mathbf{W} = \begin{bmatrix} 1 & 1 \\ j & j \\ 1 & -1 \\ j & -j \\ 0 & 0 \\ 0 & 0 \\ 0 & 0 \\ 0 & 0 \end{bmatrix}$, and the second indication information may indicate, by using 111110, that the first index value is 62, to indicate a location of the first submatrix.

It should be understood that, based on different coherent transmission capabilities of the terminal device, numbers of bits used by the first indication information and the second indication information may be different. For example, if the terminal device has the first partially-coherent transmission capability and may use the first partially-coherent precoding matrix, the second partially-coherent precoding matrix, or the non-coherent precoding matrix, the first indication information and the second indication information indicate a manner similar to the foregoing manner in which the terminal device has the fully-coherent transmission capability and may use a matrix corresponding to a low-coherent transmission capability. Details are not described herein again. For another example, the terminal device has the second partially-coherent transmission capability and may use the second partially-coherent precoding matrix or the non-coherent precoding matrix. When N=4, the first indication information and the second indication information may be separately indicated by using five bits, and the first submatrix is selected from the 32 precoding matrices. If coherent capabilities that correspond to the first submatrix and the second submatrix are the same, the second submatrix is selected from a maximum of 20 precoding matrices, and 20 to 31 are used as reserved indexes, and may indicate a location of the first submatrix in the uplink precoding matrix. For another example, the terminal device has the non-coherent transmission capability. When N=4, the first indication information and the second indication information may be separately indicated by using four bits, both the first submatrix and the second submatrix are selected from 12 non-coherent precoding matrices, and 12 to 15 are used as reserved indexes, and may indicate a location of the first submatrix in the uplink precoding matrix. For another example, the terminal device has the first partially-coherent transmission capability and may use only the first partially-coherent precoding matrix. When N=4, the first indication information and the second indication information may be separately indicated by using five bits, both the first submatrix and the second submatrix are selected from 30 precoding matrices used for full coherent transmission, and 30 and 31 are used as reserved indexes, and may indicate a location of the first submatrix in the uplink precoding matrix. For a specific implementation process, refer to the foregoing example. Details are not described herein again.

In a possible design solution, the first indication information may alternatively indicate different functions by indicating index values in different index value ranges. For example, when the first indication information indicates a first submatrix with N rows and K columns, the second index value indicated by the first indication information is within a fourth index value range. When the first indication information indicates that the first submatrix does not exist or the first submatrix is invalid, the second index value indicated by the first indication information is within the fifth index value range. The first indication information may alternatively indicate the second index value in a form of bit, and there is no intersection set between the fourth index value range and the fifth index value range.

For example, the network device may determine, based on a number of preconfigured first submatrices, a minimum number of first index values required by the first indication information to separately indicate all preconfigured first submatrices, so that the fourth index value range and the fifth index value range can be determined. For example, N=4, and the first submatrix may be any precoding matrix shown in Table 2 to Table 5. In this case, K∈[1, 4], and the first submatrix set includes 62 4×K precoding matrices. Therefore, the first indication information may need at least 6 bits to indicate the 62 4×K precoding matrices, where 000000 to 111101 respectively indicate second index values corresponding to the 62 precoding matrices with different values, that is, the fourth index value range is [0, 61]. 111110 or 111111 may indicate that the first submatrix does not exist or the first submatrix is invalid, that is, the fifth index value range is (61, 63] or [62,63].

Based on the foregoing design solution, it should be understood that the uplink precoding matrix is usually not 0. Therefore, the first indication information and the second indication information usually do not indicate both that there is no first submatrix and that there is no second submatrix, in other words, the second index value indicated by the first indication information is within the fifth index value range, and the first index value indicated by the second indication information is within the second index value range, or the second index value indicated by the first indication information is within the fifth index value range, and the first index value indicated by the second indication information is within the third index value range.

In addition, it should be understood that, when the second index value indicated by the first indication information is within the fourth index value range, and the second indication information indicates one of the foregoing three cases, structures of uplink precoding matrices obtained based on the first indication information and the second indication information respectively correspond to the foregoing structure 1 to the foregoing structure 3. A specific implementation process is similar to the implementation process in which the first indication information indicates the first submatrix with N rows and K columns. Details are not described herein again. When the second index value indicated by the first indication information is within the fifth index value range, and the first index value indicated by the second indication information is within the first index value range, structures of uplink precoding matrices obtained based on the first indication information and the second indication information may be the foregoing structure 4: $W = \begin{bmatrix} \mathbf{0} \\ \mathbf{P_2} \end{bmatrix}$. In this case, L=M.

It should be noted that, in related descriptions such as that there is no first submatrix, the first submatrix does not exist, or the first submatrix is invalid in this embodiment of this application, it may be considered that all elements in the matrix are zero, that is, the matrix is a zero matrix, or it may be considered that the matrix does not exist. In this scenario, a structure of the uplink precoding matrix is one of the foregoing structure 1, the foregoing structure 2, and the foregoing structure 4.

In a possible design solution, the network device may further send third indication information to the terminal device. The third indication information indicates that the uplink precoding matrix is a non-fully-coherent precoding matrix. In other words, the type of the uplink precoding matrix is the first partially-coherent precoding matrix, the second partially-coherent precoding matrix, or the non-coherent precoding matrix.

In a possible design solution, the third indication information may be included in the first information for sending, or may be sent separately from the first information. This is not specifically limited in embodiments of this application.

In a possible design solution, the third indication information may be carried in DCI for sending, or may be carried in a message or signaling such as an RRC message or MAC-CE signaling for sending. This is not specifically limited in embodiments of this application.

For example, when the terminal device supports a plurality of types of uplink precoding matrices, for example, a terminal device with a high coherent transmission capability may use an uplink precoding matrix corresponding to a low coherent transmission capability, the network device may indicate the type of the uplink precoding matrix by using the third indication information. For example, the third indication information may be indicated by using one bit. For example, a bit value 0 may indicate that the uplink precoding matrix is a non-fully-coherent precoding matrix, and a bit value 1 may indicate that the uplink precoding matrix is a fully-coherent precoding matrix. For another example, the third indication information may be indicated by using two bits. For example, a bit value 00 may indicate that the uplink precoding matrix is a non-coherent precoding matrix, a bit value 01 may indicate that the uplink precoding matrix is a first partially-coherent precoding matrix, a bit value 10 may indicate that the uplink precoding matrix is a second partially-coherent precoding matrix, and a bit value is 11 may indicate that the uplink precoding matrix is a fully-coherent precoding matrix. This is not specifically limited in embodiments of this application.

In this embodiment of this application, the first information may be carried in DCI for sending, or may be carried in a message or signaling such as an RRC message or MAC-CE signaling for sending. This is not specifically limited in embodiments of this application.

In a possible design, the first indication information and the second indication information that are included in the first information may be carried in a same message for sending. In another possible design, the first indication information and the second indication information may alternatively be separately sent in different messages (for example, two pieces of DCI, or one piece of DCI and one piece of RRC). This is not specifically limited in embodiments of this application.

S402: The terminal device determines an uplink precoding matrix based on the first information.

For example, after receiving the first information, the terminal device searches the preconfigured first submatrix set for a corresponding first submatrix based on an index value indicated by the first indication information in the first information, and determines a structure of the uplink precoding matrix based on the first index value indicated by the second indication information.

When the first index value indicated by the second indication information is within the first index value range, the second indication information indicates the second submatrix with N rows and M columns in the uplink precoding matrix, and L=K+M. In other words, the terminal device may determine that the uplink precoding matrix is the foregoing structure 1.

When the first index value indicated by the second indication information is within the second index value range, the second indication information indicates that the first submatrix is the precoding matrix for first N antenna ports, and L=K. In other words, the terminal device may determine that the uplink precoding matrix is the foregoing structure 2.

When the first index value indicated by the second indication information is within the third index value range, the second indication information indicates that the first submatrix is the precoding matrix for last N antenna ports, and L=K. In other words, the terminal device may determine that the uplink precoding matrix is the foregoing structure 2.

For example, if requirements on coherent capabilities that correspond to the first submatrix and the second submatrix in the uplink precoding matrix are the same, N=4, the index value indicated by the first indication information by using 011100 is 28, and the index value indicated by the second indication information by using 10010 is 18. In this case, the terminal device may determine a size of the first submatrix and a type of the second submatrix based on the first indication information, and determine a size of the second submatrix based on the first index value indicated by the second indication information, so that the terminal device can determine that the uplink precoding matrix is the foregoing structure 1. Further, the terminal device may determine, based on the index value 28 indicated by the first indication information, that the first submatrix in the uplink precoding matrix is $\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$ , and determine, based on the first index value 18 indicated by the second indication information, that the second submatrix is $\mathbf{P_2} = \begin{bmatrix} 1 & 1 \\ j & j \\ 1 & -1 \\ j & -j \end{bmatrix}$ . Further,

the terminal device may determine the uplink precoding matrix $\mathbf{W} = \begin{bmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 1 \\ 0 & 0 & 0 & 0 & j & j \\ 0 & 0 & 0 & 0 & 1 & -1 \\ 0 & 0 & 0 & 0 & j & -j \end{bmatrix}$ , that is, the

number of uplink transmission layers is 6. Based on this, the terminal device may precode uplink data based on the uplink precoding matrix.

For another example, coherent capabilities that correspond to the first submatrix and the second submatrix in the uplink precoding matrix are not limited to being the same, N=4, an index value indicated by the first indication information by using 011100 is 28, and a first index value indicated by the second indication information by using 100110 is 38. In this case, the terminal device may determine that the uplink precoding matrix is the foregoing structure 1. Further, the terminal device may determine, based on the index value 28 indicated by the first indication information, that the first submatrix in the uplink

precoding matrix is $\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$ , and determine, based on the first index value 38 indicated by the second indication information, that the second submatrix is $\mathbf{P_2} = \begin{bmatrix} 1 & 0 \\ 0 & 1 \\ 1 & 0 \\ 0 & -j \end{bmatrix}$ . Further, the terminal device may determine the uplink precoding matrix $\mathbf{W} = \begin{bmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 0 \\ 0 & 0 & 0 & 0 & 0 & 1 \\ 0 & 0 & 0 & 0 & 1 & 0 \\ 0 & 0 & 0 & 0 & 0 & -j \end{bmatrix}$ , that is, the number of uplink transmission layers is 6. Based on this, the terminal device may precode uplink data based on the uplink precoding matrix.

For another example, coherent capabilities that correspond to the first submatrix and the second submatrix in the uplink precoding matrix are not limited to being the same, N=4, an index value indicated by the first indication information by using 011100 is 28, and a first index value indicated by the second indication information by using 111110 is 62. In this case, the terminal device may determine that the uplink precoding matrix is the foregoing structure 2. Further, the terminal device may determine, based on the index value 28 indicated by the first indication information, that the first submatrix is

$\mathbf{P_1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$ , and determine, based on the first index value 62 indicated by the second indication information, that the first submatrix is the precoding matrix for first N antenna ports. Further, the terminal device may determine the uplink precoding matrix $\mathbf{W} = \begin{bmatrix} 1 & 1 & 1 & 1 \\ 1 & -1 & 1 & -1 \\ 1 & 1 & -1 & -1 \\ 1 & -1 & -1 & 1 \\ 0 & 0 & 0 & 0 \\ 0 & 0 & 0 & 0 \\ 0 & 0 & 0 & 0 \\ 0 & 0 & 0 & 0 \end{bmatrix}$ , that is, the number of uplink transmission layers is 4. Based on this, the terminal device may precode uplink data based on the uplink precoding matrix.

In a possible design solution, as shown in FIG. 4, the uplink codebook indication method provided in this embodiment of this application may further include the following steps.

S403: The terminal device sends uplink data based on the uplink precoding matrix.

For example, the uplink precoding matrix is $\mathbf{W} = \begin{bmatrix} 1 & 1 & 1 & 1 & 0 & 0 \\ 1 & -1 & 1 & -1 & 0 & 0 \\ 1 & 1 & -1 & -1 & 0 & 0 \\ 1 & -1 & -1 & 1 & 0 & 0 \\ 0 & 0 & 0 & 0 & 1 & 0 \\ 0 & 0 & 0 & 0 & 0 & 1 \\ 0 & 0 & 0 & 0 & 1 & 0 \\ 0 & 0 & 0 & 0 & 0 & -j \end{bmatrix}$ . The terminal device

precodes, by using the uplink precoding matrix, uplink data that passes through the 2N antenna ports, to send the precoded uplink data through the 2N antenna ports. For a specific implementation process, refer to related descriptions in an existing implementation process. Details are not described herein again.

It should be noted that the uplink precoding matrix in this embodiment of this application is constructed based on a precoding matrix (namely, the first submatrix and the second submatrix) used to precode N antenna ports. In addition, the uplink precoding matrix may alternatively be constructed based on a precoding matrix used to precode N/2 antenna ports.

For example, a structure of the uplink precoding matrix is the following structure 5:

$$\mathbf{W} = \begin{bmatrix} \mathbf{P_{11}} & 0 & 0 & 0 \\ 0 & \mathbf{P_{12}} & 0 & 0 \\ 0 & 0 & \mathbf{P_{13}} & 0 \\ 0 & 0 & 0 & \mathbf{P_{14}} \end{bmatrix}$$, where $\mathbf{P_{11}}$ is a first precoding matrix with N/2 rows and A columns, $\mathbf{P_{12}}$ is a

second precoding matrix with N/2 rows and B columns, $\mathbf{P_{13}}$ is a third precoding matrix with N/2 rows and C columns, $\mathbf{P_{14}}$ is a fourth precoding matrix with N/2 rows and D columns, A, B, C, and D are integers, and N/2 is a positive integer.

In the uplink precoding matrix shown in the foregoing structure 5, $\mathbf{P_{11}}$, $\mathbf{P_{12}}$, $\mathbf{P_{13}}$, and $\mathbf{P_{14}}$ coexist, that is, L=A+B+C+D. It should be understood that, similar to the uplink precoding matrix described in S401 to S403, $\mathbf{P_{11}}$, $\mathbf{P_{12}}$, $\mathbf{P_{13}}$, and $\mathbf{P_{14}}$ may not coexist in the uplink precoding matrix constructed based on the precoding matrix used to precode the N/2 antenna ports, for example, there may be only one of the four, or there may be any two or any three of the four. Therefore, the uplink precoding matrix constructed based on the precoding matrix used to precode the N/2 antenna ports may be indicated by using four pieces of indication information.

For example, the first precoding matrix $\mathbf{P_{11}}$ is indicated by using first sub-indication information, the second precoding matrix $\mathbf{P_{12}}$ is indicated by using second sub-indication information, the third precoding matrix $\mathbf{P_{13}}$ is indicated by using third sub-indication information, and the fourth precoding matrix $\mathbf{P_{13}}$ is indicated by using fourth sub-indication information.

When the first sub-indication information indicates the first precoding matrix with N/2 rows and A columns, an index value indicated by the first sub-indication information is within an index value range 1. When the first sub-indication information indicates that the first precoding matrix does not exist or the first precoding matrix is invalid, an index value indicated by the first sub-indication information is within an index value range 2.

When the second sub-indication information indicates the second precoding matrix with N/2 rows and B columns, an index value indicated by the second sub-indication information is within an index value range 3. When the second sub-indication information indicates that the second precoding matrix does not exist or the second precoding matrix is invalid, an index value indicated by the second sub-indication information is within an index value range 4.

When the third sub-indication information indicates the third precoding matrix with N/2 rows and C columns, an index value indicated by the third sub-indication information is within an index value range 5. When the third sub-indication information indicates that the third precoding matrix does not exist or the third precoding matrix is invalid, an index value indicated by the third sub-indication information is within an index value range 6.

When the fourth sub-indication information indicates the fourth precoding matrix with N/2 rows and D columns, an index value indicated by the fourth sub-indication information is within an index value range 7. When the fourth sub-indication information indicates that the fourth precoding matrix does not exist or the fourth precoding matrix is invalid, an index value indicated by the fourth sub-indication information is within an index value range 8.

For example, N=4, and the first precoding matrix $\mathbf{P_{11}}$, the second precoding matrix $\mathbf{P_{12}}$, the third precoding matrix $\mathbf{P_{13}}$, and the fourth precoding matrix $\mathbf{P_{13}}$ may be precoding matrices that are defined in an existing protocol and that are used to precode two antenna ports, as shown in Table 7 and Table 8. That is, N/2=2, A∈[1, 2], and B∈[1, 2]. Table 7 and Table 8 show nine precoding matrices, where there are six fully-coherent precoding matrices and three non-fully-coherent precoding matrices. The first sub-indication information is used as an example for description. The first sub-indication information needs at least three bits to indicate one (namely, the first precoding matrix) of six fully-coherent precoding matrices with different values. 000 to 101 respectively indicate index values corresponding to six precoding matrices with different values, that is, the index value range 1 is [0, 5]. Index values [6, 7] corresponding to 110 and 111 are used as reserved indexes, and may indicate that the first precoding matrix does not exist or the first precoding matrix is invalid, that is, the index value range 2 is [6, 7]. For specific descriptions of the second sub-indication information, the third sub-indication information, and the fourth sub-indication information, refer to related example descriptions of the first sub-indication information.

Therefore, each piece of sub-indication information indicates two functions. Based on different functions indicated by the four pieces of sub-indication information, sizes and structures of obtained uplink precoding matrices are also different. It should be understood that the uplink precoding matrix is usually not 0. Therefore, the four pieces of sub-indication information indicating the uplink precoding matrix cannot simultaneously indicate that there is no first precoding matrix, no second precoding matrix, no third precoding matrix, and no fourth precoding matrix, in other words, at least one of the four pieces of sub-indication information indicates a precoding matrix.

For example, if the first sub-indication information indicates the first precoding matrix with N/2 rows and A columns, the second sub-indication information indicates the second precoding matrix with N/2 rows and B columns, and the third sub-indication information indicates that the third precoding matrix does not exist or the third precoding matrix is invalid, and when the fourth sub-indication information indicates that the fourth precoding matrix does not exist or the fourth precoding matrix is invalid, the structure of the uplink precoding matrix is: $\mathbf{W} = \begin{bmatrix} \mathbf{P_{11}} & \mathbf{0} \\ \mathbf{0} & \mathbf{P_{12}} \\ \mathbf{0} & \mathbf{0} \\ \mathbf{0} & \mathbf{0} \end{bmatrix}$.

In a possible design solution, the first sub-indication information, the second sub-indication information, the third sub-indication information, and the fourth indication information may be separately sent, or may be partially sent or may be sent together. This is not specifically limited in embodiments of this application. For example, the first sub-indication information and the second sub-indication information may be included in the first indication information for sending, and the third sub-indication information and the fourth indication information may be included in the second indication information for sending. For another example, the first sub-indication information, the second sub-indication information, the third sub-indication information, and the fourth indication information are all included in the first information for sending.

Based on the uplink codebook indication method shown in FIG. 4, the network device may construct, based on the first submatrix used to precode the N antenna ports, the uplink precoding matrix used to precode the 2N antenna ports, and indicate the uplink precoding matrix to the terminal device by using the first indication information and the second indication information. Therefore, the terminal device can enable, by using the uplink precoding matrix, a terminal device with more transmit antenna ports to perform uplink transmission. For example, a terminal device with more than four antenna ports is enabled to perform uplink transmission of more than 4 uplink transmission layers, so that an uplink transmission throughput can be increased.

It may be understood that, in the foregoing embodiments, the methods and/or the steps implemented by the network device may alternatively be implemented by a part (for example, a processor, a chip, a chip system, a circuit, a logical module, or software) that can be used in the network device, and the methods and/or the steps implemented by the terminal device may alternatively be implemented by a part (for example, a processor, a chip, a chip system, a circuit, a logical module, or software) that can be used in the terminal device.

The foregoing mainly describes the solutions provided in this application. Correspondingly, this application further provides a communication apparatus. The communication apparatus is configured to implement various methods in the foregoing method embodiments. The communication apparatus may be the network device in the foregoing method embodiments, an apparatus including the network device, or a component that can be used in the network device, for example, a chip or a chip system. Alternatively, the communication apparatus may be the terminal device in the foregoing method embodiments, an apparatus including the terminal device, or a component that may be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used.

For example, the communication apparatus is the terminal device or the network device in the foregoing method embodiments. FIG. 5 is a diagram of a structure of a communication apparatus according to an embodiment of this application. As shown in FIG. 5, the communication apparatus 500 includes a processing module 501 and a transceiver module 502. The processing module 501 is configured to perform a processing function of the terminal device or the network device in the foregoing method embodiments. The transceiver module 502 is configured to perform a transceiver function of the terminal device or the network device in the foregoing method embodiments.

All related content of the steps in the foregoing method embodiments may be cited in function descriptions of the corresponding functional modules. Details are not described herein again.

The communication apparatus 500 provided in this embodiment may perform the foregoing methods. Therefore, for technical effects that can be achieved by the communication apparatus 500, refer to the foregoing method embodiments. Details are not described herein again.

In a possible design solution, in this embodiment of this application, the transceiver module 502 may include a receiving module and a sending module (not shown in FIG. 5). The transceiver module is configured to implement a sending function and a receiving function of the communication apparatus 500.

In a possible design solution, the communication apparatus 500 may further include a storage module (not shown in FIG. 5), and the storage module stores a program or instructions. When the processing module 501 executes the program or the instructions, the communication apparatus 500 is enabled to perform a function of the terminal device or the network device in the method shown in FIG. 4.

It should be understood that the processing module 501 in the communication apparatus 500 may be implemented by a processor or a processor-related circuit component, and may be a processor or a processing unit. The transceiver module 502 may be implemented by a transceiver or a transceiver-related circuit component, and may be a transceiver or a transceiver unit.

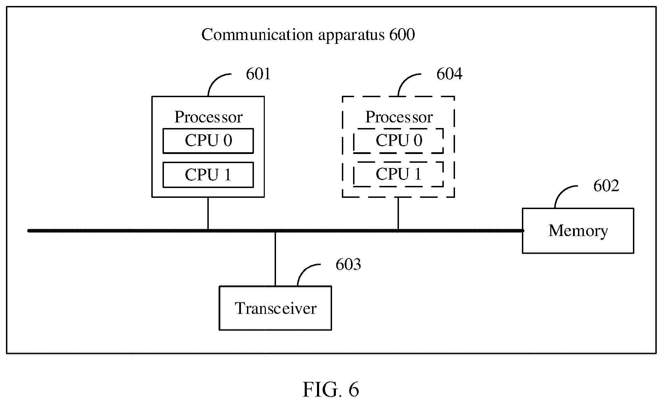

For example, FIG. 6 is a diagram of a structure of another communication apparatus according to an embodiment of this application. The communication apparatus may be a terminal device or a network device, or may be a chip (system) or another part or component that can be disposed in the terminal device or the network device. As shown in FIG. 6, the communication apparatus 600 may include a processor 601. Optionally, the communication apparatus 600 may further include a memory 602 and/or a transceiver 603. The processor 601 is coupled to the memory 602 and the transceiver 603, for example, may be connected to the memory 602 and the transceiver 603 through a communication bus.

The following describes each component of the communication apparatus 600 in detail with reference to FIG. 6.

The processor 601 is a control center of the communication apparatus 600, and may be a processor, or may be a generic term of a plurality of processing elements. For example, the processor 601 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 601 may perform various functions of the communication apparatus 600 by running or executing a software program stored in the memory 602 and invoking data stored in the memory 602.

In specific implementation, in an embodiment, the processor 601 may include one or more CPUs, for example, a CPU 0 and a CPU 1 shown in FIG. 6.

During specific implementation, in an embodiment, the communication apparatus 600 may alternatively include a plurality of processors, for example, the processor 601 and a processor 604 shown in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

The memory 602 is configured to store a software program for performing the solutions of this application, and the processor 601 controls execution of the software program. For a specific implementation, refer to the foregoing method embodiments. Details are not described herein again.

Optionally, the memory 602 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instruction or data structure and capable of being accessed by a computer. However, this is not limited. The memory 602 may be integrated with the processor 601, or may exist independently, and is coupled to the processor 601 through an interface circuit (not shown in FIG. 6) in the communication apparatus 600. This is not specifically limited in embodiments of this application.

The transceiver 603 is configured to communicate with another communication apparatus. For example, the communication apparatus 600 is a terminal device, and the transceiver 603 may be configured to communicate with a network device or another terminal device. For another example, the communication apparatus 600 is a network device, and the transceiver 603 may be configured to communicate with a terminal device or another network device.

Optionally, the transceiver 603 may include a receiver and a transmitter (not separately shown in FIG. 6). The receiver is configured to implement a receiving function, and the transmitter is configured to implement a sending function.

Optionally, the transceiver 603 may be integrated with the processor 601, or may exist independently, and is coupled to the processor 601 through an interface circuit (not shown in FIG. 6) in the communication apparatus 600. This is not specifically limited in embodiments of this application.

It should be noted that the structure of the communication apparatus 600 shown in FIG. 6 does not constitute a limitation on the communication apparatus. An actual communication apparatus may include more or fewer components than those shown in the figure, or combine some components, or have different component arrangement.

In addition, for technical effects of the communication apparatus 600, refer to the technical effects of the communication method in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used to implement embodiments, embodiments may be implemented completely or partially in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. An uplink codebook indication method, wherein the method comprises:

   receiving first information from a network device, wherein the first information indicates an uplink precoding matrix with 2N rows and L columns, and a structure of the uplink precoding matrix is:

   $$W = \begin{bmatrix} P_{11} & 0 & 0 & 0 \\ 0 & P_{12} & 0 & 0 \\ 0 & 0 & P_{13} & 0 \\ 0 & 0 & 0 & P_{14} \end{bmatrix}$$, wherein $P_{11}$ is a first precoding matrix with N/2 rows and A columns,

   $P_{12}$ is a second precoding matrix with N/2 rows and B columns, $P_{13}$ is a third precoding matrix with N/2 rows and C columns, $P_{14}$ is a fourth precoding matrix with N/2 rows and D columns, 2N is a number of antenna ports of a terminal device, L is a number of uplink transmission layers, A, B, C, and D are integers, at least one of $P_{11}$, $P_{12}$, $P_{13}$, and $P_{14}$ is a non-zero matrix, L=A+B+C+D, and L and N/2 are positive integers; and
   determining the uplink precoding matrix based on the first information.

2. An uplink codebook indication method, wherein the method comprises:

   generating first information, wherein the first information indicates an uplink precoding matrix with 2N rows and L columns, and a structure of the uplink precoding matrix is: $W = \begin{bmatrix} P_{11} & 0 & 0 & 0 \\ 0 & P_{12} & 0 & 0 \\ 0 & 0 & P_{13} & 0 \\ 0 & 0 & 0 & P_{14} \end{bmatrix}$, wherein $P_{11}$ is a

   first precoding matrix with N/2 rows and A columns, $P_{12}$ is a second precoding matrix with N/2 rows and B columns, $P_{13}$ is a third precoding matrix with N/2 rows and C columns, $P_{14}$ is a fourth precoding matrix with N/2 rows and D columns, 2N is a number of antenna ports of a terminal device, L is a number of uplink transmission layers, A, B, C, and D are non-negative integers, at least one of $P_{11}$, $P_{12}$, $P_{13}$, and $P_{14}$ is a non-zero matrix, L=A+B+C+D, and L and N/2 are positive integers; and
   sending the first information to the terminal device.

3. The method according to claim 1 or 2, wherein a type of the uplink precoding matrix corresponds to a coherent transmission capability of the terminal device.

4. The method according to any one of claims 1 to 3, wherein N=4, and A, B, C, and D$\in$[0,2].

5. An uplink codebook indication method, wherein the method comprises:

   receiving first information from a network device, wherein the first information indicates an uplink precoding matrix with 2N rows and L columns, the first information comprises first indication information and second indication information, and the first indication information indicates a first submatrix with N rows and K columns in the uplink precoding matrix, wherein

when a first index value indicated by the second indication information is within a first index value range, the second indication information indicates a second submatrix with N rows and M columns in the uplink precoding matrix, and L=K+M; or when a first index value indicated by the second indication information is within a second index value range, the second indication information indicates that the first submatrix is a precoding matrix for first N antenna ports, and L=K; or when a first index value indicated by the second indication information is within a third index value range, the second indication information indicates that the first submatrix is a precoding matrix for last N antenna ports, and L=K, wherein

there is no intersection set between any two of the first index value range, the second index value range, and the third index value range, 2N is a number of antenna ports of a terminal device, L is a number of uplink transmission layers, and L, N, M, and K are positive integers; and

determining the uplink precoding matrix based on the first information.

6. The method according to claim 5, wherein the method further comprises:
receiving third indication information from the network device, wherein the third indication information indicates that the uplink precoding matrix is a non-fully-coherent precoding matrix.

7. An uplink codebook indication method, wherein the method comprises:

generating first information, wherein the first information indicates an uplink precoding matrix with 2N rows and L columns, the first information comprises first indication information and second indication information, and the first indication information indicates a first submatrix with N rows and K columns in the uplink precoding matrix, wherein

when the second indication information indicates a second submatrix with N rows and M columns in the uplink precoding matrix, a first index value indicated by the second indication information is within a first index value range, and L=K+M; or when the second indication information indicates that the first submatrix is a precoding matrix for first N antenna ports, a first index value indicated by the second indication information is within a second index value range, and L=K; or when the second indication information indicates that the first submatrix is a precoding matrix for last N antenna ports, a first index value indicated by the second indication information is within a third index value range, and L=K, wherein

there is no intersection set between any two of the first index value range, the second index value range, and the third index value range, 2N is a number of antenna ports of a terminal device, L is a number of uplink transmission layers, and L, N, M, and K are positive integers; and

sending the first information to the terminal device.

8. The method according to claim 7, wherein the method further comprises:
sending third indication information to the terminal device, wherein the third indication information indicates that the uplink precoding matrix is a non-fully-coherent precoding matrix.

9. The method according to claim 6 or 8, wherein the third indication information is carried in downlink control information DCI.

10. The method according to any one of claims 5 to 9, wherein when the second indication information indicates the second submatrix with N rows and M columns in the uplink precoding matrix, the uplink precoding matrix is

represented as $\mathbf{W} = \begin{bmatrix} \mathbf{P}_1 & \mathbf{0} \\ \mathbf{0} & \mathbf{P}_2 \end{bmatrix}$, wherein $\mathbf{W}$ is the uplink precoding matrix, $\mathbf{P}_1$ is the first submatrix, and $\mathbf{P}_2$ is the second submatrix.

11. The method according to any one of claims 5 to 9, wherein when the second indication information indicates that the first submatrix is the precoding matrix for first N antenna ports, the uplink precoding matrix is represented as

$\mathbf{W} = \begin{bmatrix} \mathbf{P}_1 \\ \mathbf{0} \end{bmatrix}$, wherein $\mathbf{W}$ is the uplink precoding matrix, and $\mathbf{P}_1$ is the first submatrix.

12. The method according to any one of claims 5 to 9, wherein when the second indication information indicates that the first submatrix is the precoding matrix for last N antenna ports, the uplink precoding matrix is represented as

$$W = \begin{bmatrix} 0 \\ P_1 \end{bmatrix}$$, wherein **W** is the uplink precoding matrix, and **P₁** is the first submatrix.

13. The method according to any one of claims 5 to 12, wherein the second indication information indicates $2^T$ first index values by using T bits, the first index value range is [0, Q], the second index value range is (Q, J], the third index value range is (J, $2^T$), and T, Q, and J are positive integers.

14. The method according to any one of claims 5 to 13, wherein a type of the first submatrix is a fully-coherent precoding matrix, a partially-coherent precoding matrix, or a non-coherent precoding matrix; and a type of the second submatrix is the fully-coherent precoding matrix, the partially-coherent precoding matrix, or the non-coherent precoding matrix.

15. The method according to any one of claims 5 to 14, wherein a type of the uplink precoding matrix is a first partially-coherent precoding matrix, a second partially-coherent precoding matrix, or a non-coherent precoding matrix, wherein the first partially-coherent precoding matrix represents that the 2N antenna ports are divided into two groups for coherent transmission, and the second partially-coherent precoding matrix represents that the 2N antenna ports are divided into four groups for coherent transmission.

16. The method according to any one of claims 1 to 15, wherein the first information is carried in DCI.

17. A communication apparatus, wherein the apparatus comprises a processing module and a transceiver module, wherein

the transceiver module is configured to receive first information from a network device, the first information indicates an uplink precoding matrix with 2N rows and L columns, and a structure of the uplink precoding matrix is

$$W = \begin{bmatrix} P_{11} & 0 & 0 & 0 \\ 0 & P_{12} & 0 & 0 \\ 0 & 0 & P_{13} & 0 \\ 0 & 0 & 0 & P_{14} \end{bmatrix}$$, wherein **P₁₁** is a first precoding matrix with N/2 rows and A columns, **P₁₂** is a second precoding matrix with N/2 rows and B columns, **P₁₃** is a third precoding matrix with N/2 rows and C columns, **P₁₄** is a fourth precoding matrix with N/2 rows and D columns, 2N is a number of antenna ports of the communication apparatus, L is a number of uplink transmission layers, A, B, C, and D are integers, at least one of **P₁₁, P₁₂, P₁₃**, and **P₁₄** is a non-zero matrix, L=A+B+C+D, and L and N/2 are positive integers; and the processing module is configured to determine the uplink precoding matrix based on the first information.

18. The apparatus according to claim 17, wherein a type of the uplink precoding matrix corresponds to a coherent transmission capability of the communication apparatus.

19. A communication apparatus, wherein the apparatus comprises a processing module and a transceiver module, wherein

the processing module is configured to generate first information, the first information indicates an uplink precoding matrix with 2N rows and L columns, and a structure of the uplink precoding matrix is

$$W = \begin{bmatrix} P_{11} & 0 & 0 & 0 \\ 0 & P_{12} & 0 & 0 \\ 0 & 0 & P_{13} & 0 \\ 0 & 0 & 0 & P_{14} \end{bmatrix}$$, wherein **P₁₁** is a first precoding matrix with N/2 rows and A columns, **P₁₂** is a second precoding matrix with N/2 rows and B columns, **P₁₃** is a third precoding matrix with N/2 rows and C columns, **P₁₄** is a fourth precoding matrix with N/2 rows and D columns, 2N is a number of antenna ports of a terminal device, L is a number of uplink transmission layers, A, B, C, and D are non-negative integers, at least one of **P₁₁, P₁₂, P₁₃**, and **P₁₄** is a non-zero matrix, L=A+B+C+D, and L and N/2 are positive integers; and the transceiver module is configured to send the first information to the terminal device.

20. The apparatus according to claim 19, wherein a type of the uplink precoding matrix corresponds to a coherent transmission capability of the terminal device.

21. The apparatus according to any one of claims 17 to 20, wherein N=4, and A, B, C, and DE[0,2].

22. A communication apparatus, wherein the apparatus comprises a processing module and a transceiver module, wherein

the transceiver module is configured to receive first information from a network device, the first information indicates an uplink precoding matrix with 2N rows and L columns, the first information comprises first indication information and second indication information, and the first indication information indicates a first submatrix with N rows and K columns in the uplink precoding matrix;
when a first index value indicated by the second indication information is within a first index value range, the second indication information indicates a second submatrix with N rows and M columns in the uplink precoding matrix, and L=K+M; or when a first index value indicated by the second indication information is within a second index value range, the second indication information indicates that the first submatrix is a precoding matrix for first N antenna ports, and L=K; or when a first index value indicated by the second indication information is within a third index value range, the second indication information indicates that the first submatrix is a precoding matrix for last N antenna ports, and L=K;
there is no intersection set between any two of the first index value range, the second index value range, and the third index value range, 2N is a number of antenna ports of the communication apparatus, L is a number of uplink transmission layers, and L, N, M, and K are positive integers; and
the processing module is configured to determine the uplink precoding matrix based on the first information.

23. The apparatus according to claim 22, wherein the transceiver module is further configured to receive third indication information from the network device, wherein the third indication information indicates that the uplink precoding matrix is a non-fully-coherent precoding matrix.

24. A communication apparatus, wherein the apparatus comprises a processing module and a transceiver module, wherein

the processing module is configured to generate first information, the first information indicates an uplink precoding matrix with 2N rows and L columns, the first information comprises first indication information and second indication information, and the first indication information indicates a first submatrix with N rows and K columns in the uplink precoding matrix;
when the second indication information indicates a second submatrix with N rows and M columns in the uplink precoding matrix, a first index value indicated by the second indication information is within a first index value range, and L=K+M; or when the second indication information indicates that the first submatrix is a precoding matrix for first N antenna ports, a first index value indicated by the second indication information is within a second index value range, and L=K; or when the second indication information indicates that the first submatrix is a precoding matrix for last N antenna ports, a first index value indicated by the second indication information is within a third index value range, and L=K;
there is no intersection set between any two of the first index value range, the second index value range, and the third index value range, 2N is a number of antenna ports of a terminal device, L is a number of uplink transmission layers, and L, N, M, and K are positive integers; and
the transceiver module is configured to send the first information to the terminal device.

25. The apparatus according to claim 24, wherein the transceiver module is further configured to send third indication information to the terminal device, and the third indication information indicates that the uplink precoding matrix is a non-fully-coherent precoding matrix.

26. The apparatus according to claim 23 or 25, wherein the third indication information is carried in downlink control information DCI.

27. The apparatus according to any one of claims 22 to 26, wherein when the second indication information indicates the second submatrix with N rows and M columns in the uplink precoding matrix, the uplink precoding matrix is

represented as $\mathbf{W} = \begin{bmatrix} \mathbf{P}_1 & \mathbf{0} \\ \mathbf{0} & \mathbf{P}_2 \end{bmatrix}$, wherein $\mathbf{W}$ is the uplink precoding matrix, $\mathbf{P}_1$ is the first submatrix, and $\mathbf{P}_2$ is

the second submatrix.

28. The apparatus according to any one of claims 22 to 26, wherein when the second indication information indicates that the first submatrix is the precoding matrix for first N antenna ports, the uplink precoding matrix is represented as

$$W = \begin{bmatrix} P_1 \\ 0 \end{bmatrix}$$, wherein **W** is the uplink precoding matrix, and $P_1$ is the first submatrix.

29. The apparatus according to any one of claims 22 to 26, wherein when the second indication information indicates that the first submatrix is the precoding matrix for last N antenna ports, the uplink precoding matrix is represented as

$$W = \begin{bmatrix} 0 \\ P_1 \end{bmatrix}$$, wherein **W** is the uplink precoding matrix, and $P_1$ is the first submatrix.

30. The apparatus according to any one of claims 22 to 29, wherein the second indication information indicates $2^T$ first index values by using T bits, the first index value range is [0, Q], the second index value range is (Q, J], the third index value range is (J, $2^T$), and T, Q, and J are positive integers.

31. The apparatus according to any one of claims 22 to 30, wherein a type of the first submatrix is a fully-coherent precoding matrix, a partially-coherent precoding matrix, or a non-coherent precoding matrix; and a type of the second submatrix is the fully-coherent precoding matrix, the partially-coherent precoding matrix, or the non-coherent precoding matrix.

32. The apparatus according to any one of claims 22 to 31, wherein a type of the uplink precoding matrix is a first partially-coherent precoding matrix, a second partially-coherent precoding matrix, or a non-coherent precoding matrix, the first partially-coherent precoding matrix represents that the 2N antenna ports are divided into two groups for coherent transmission, and the second partially-coherent precoding matrix represents that the 2N antenna ports are divided into four groups for coherent transmission.

33. The apparatus according to any one of claims 17 to 32, wherein the first information is carried in DCI.

34. A communication apparatus, comprising a processor and a communication interface, wherein the communication interface is configured to perform communication, and the processor is configured to execute computer instructions, so that the method according to any one of claims 1 to 16 is implemented.

35. The apparatus according to claim 34, wherein the apparatus is a chip.

36. A communication apparatus, comprising a memory and a processor, wherein the memory is configured to store computer instructions, and the processor is configured to execute the computer instructions, so that the method according to any one of claims 1 to 16 is implemented.

37. The apparatus according to claim 36, wherein the apparatus is a chip.

38. A communication chip, wherein the communication chip stores instructions, and when the chip runs on a communication device, the method according to any one of claims 1 to 16 is implemented.

39. A computer-readable storage medium, wherein the computer-readable storage medium stores a computer program or instructions, and when the computer program or the instructions are run on a computer, the computer is enabled to perform the method according to any one of claims 1 to 16.

40. A computer program product, wherein the computer program product comprises a computer program or instructions, and when the computer program or the instructions are run on a computer, the computer is enabled to perform the method according to any one of claims 1 to 16.

FIG. 1

FIG. 2

FIG. 3

Network device

Terminal device

S401: First information

S402: Determine an uplink precoding matrix based on the first information

S403: Uplink data

FIG. 4

Communication apparatus 500

501

502

Processing module

Transceiver module

FIG. 5

Communication apparatus 600

601

604

Processor

CPU 0

CPU 1

Processor

CPU 0

CPU 1

602

Memory

603

Transceiver

FIG. 6

## INTERNATIONAL SEARCH REPORT

| International application No. |
| --- |
| **PCT/CN2024/076165** |

**A. CLASSIFICATION OF SUBJECT MATTER**

H04L25/03(2006.01)i; H04B7/0456(2017.01)i

According to International Patent Classification (IPC) or to both national classification and IPC

**B. FIELDS SEARCHED**

Minimum documentation searched (classification system followed by classification symbols)

IPC: H04L, H04B, H04W

Documentation searched other than minimum documentation to the extent that such documents are included in the fields searched

Electronic data base consulted during the international search (name of data base and, where practicable, search terms used)

CNTXT, ENTXT, DWPI, 3GPP, ENTXTC: 码本, 上行, 预编码, 矩阵, 天线, 端口, 传输层, 数, 索引, 区间, 交集, codebook, uplink, UL, precoding, matrix, antenna, port, transmission, layer, number, index, interval, intersection

**C. DOCUMENTS CONSIDERED TO BE RELEVANT**

| Category* | Citation of document, with indication, where appropriate, of the relevant passages | Relevant to claim No. |
| --- | --- | --- |
| A | CN 114070366 A (HUAWEI TECHNOLOGIES CO., LTD.) 18 February 2022 (2022-02-18) description, paragraphs [0004]-[0065] | 1-40 |
| A | WO 2023015529 A1 (GUANGDONG OPPO MOBILE TELECOMMUNICATIONS CORP., LTD.) 16 February 2023 (2023-02-16) entire document | 1-40 |
| A | CN 114598366 A (HUAWEI TECHNOLOGIES CO., LTD.) 07 June 2022 (2022-06-07) entire document | 1-40 |
| A | CN 113497645 A (DATANG MOBILE COMMUNICATIONS EQUIPMENT CO., LTD.) 12 October 2021 (2021-10-12) entire document | 1-40 |
| A | CATT. "Remaining Issues on Codebook Based UL Transmission" *3GPP TSG RAN WG1 Meeting #92 R1-1801716*, 02 March 2018 (2018-03-02), entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 April 2024** | **23 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/076165** |

| Patent document cited in search report | | | Publication date (day/month/year) | Patent family member(s) | | | Publication date (day/month/year) |
| --- | --- | --- | --- | --- | --- | --- | --- |
| CN | 114070366 | A | 18 February 2022 | WO | 2022022632 | A1 | 03 February 2022 |
| | | | | IN | 202327006500 | A | 17 February 2023 |
| | | | | EP | 4181415 | A1 | 17 May 2023 |
| | | | | US | 2023170941 | A1 | 01 June 2023 |
| WO | 2023015529 | A1 | 16 February 2023 | CN | 117616699 | A | 27 February 2024 |
| CN | 114598366 | A | 07 June 2022 | WO | 2022117046 | A1 | 09 June 2022 |
| | | | | EP | 4239898 | A1 | 06 September 2023 |
| | | | | US | 2024022306 | A1 | 18 January 2024 |
| CN | 113497645 | A | 12 October 2021 | WO | 2021197418 | A1 | 07 October 2021 |
| | | | | TW | 202139619 | A | 16 October 2021 |
| | | | | EP | 4131795 | A1 | 08 February 2023 |
| | | | | US | 2023155644 | A1 | 18 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310154233